# EUROPEAN PATENT APPLICATION

(11) **EP 4 744 469 A1**
(43) Date of publication of application: **20.05.2026**
(21) Application number: 25216092.4
(22) Date of filing: 14.11.2025
(51) Int. Cl.: A01B 69/04

(54) **COMMUNICATION CONTROL METHOD, COMMUNICATION CONTROL PROGRAM, AND COMMUNICATION CONTROL SYSTEM**

(30) Priority: 18.11.2024 JP 2024200704
(71) Applicant: Yanmar Holdings Co., Ltd., Osaka-shi, Osaka (JP)
(72) Inventor: NISHII, Yasuto, Okayama-shi (JP); NISHIBEPPU, Shinya, Okayama-shi (JP); MURAYAMA, Masaaki, Okayama-shi (JP)
(74) Representative: Sekiguchi, Kazuya

(57) **Abstract**

[Problem] Provided are a communication control method, a communication control program, and a communication control system capable of reducing a communication load on a communication device capable of wireless communication with a work vehicle, and inhibiting deterioration in workability of a user.

[Solution] An automatic traveling system 1 includes: a setting processing unit 412 that sets a communication amount of a case where data is transmitted from a work vehicle 10 that performs predetermined work in a field to a management server 40 capable of wireless communication with the work vehicle 10, on the basis of a state of the work vehicle 10 or operation information of an operator; and a transmission processing unit 112 that causes the work vehicle 10 to transmit the data to the management server 40 on the basis of the communication amount set by the setting processing unit 412.

## Description

### TECHNICAL FIELD

The present invention relates to a technique of controlling data communication between a work vehicle capable of automatic traveling and a communication device capable of wireless communication.

### BACKGROUND ART

Conventionally, there is known a technique of causing automatic traveling of a work vehicle that performs agricultural work in a field in accordance with a preset target route. In addition, there is also known a technique of performing setting related to automatic traveling using a communication device capable of wireless communication with a work vehicle and displaying a traveling status and a work status of the work vehicle (see, for example, Patent Document 1).

### PRIOR ART DOCUMENT

### PATENT DOCUMENT

Patent Document 1: JP-A-2019-174985

### SUMMARY OF INVENTION

### TECHNICAL PROBLEM

In a system that causes a wireless communication device and a work vehicle to wirelessly communicate with each other, if the number of work vehicles connected to the wireless communication device is large, there arises a problem that a communication amount increases and a communication load increases. In addition, when the communication amount is restricted in order to lower the communication load, there also arises a problem that communication quality becomes deteriorated and workability of a user who uses the wireless communication device becomes deteriorated.

An object of the present invention is to provide a communication control method, a communication control program, and a communication control system capable of reducing a communication load on a communication device capable of wireless communication with a work vehicle, and inhibiting deterioration in workability of a user.

### SOLUTION TO PROBLEM

A communication control method according to the present invention is a method for executing: setting a communication amount of a case where data is transmitted from a work vehicle that performs predetermined work in a field to a communication device capable of wireless communication with the work vehicle, on the basis of a state of the work vehicle or operation information of an operator; and causing the work vehicle to transmit the data to the communication device on the basis of the set communication amount.

A communication control program according to the present invention is a program for causing one or a plurality of processors to execute: setting a communication amount of a case where data is transmitted from a work vehicle that performs predetermined work in a field to a communication device capable of wireless communication with the work vehicle, on the basis of a state of the work vehicle or operation information of an operator; and causing the work vehicle to transmit the data to the communication device on the basis of the set communication amount.

The communication control system according to the present invention includes a setting processing unit and a transmission processing unit. The setting processing unit sets a communication amount of a case where data is transmitted from a work vehicle that performs predetermined work in a field to a communication device capable of wireless communication with the work vehicle, on the basis of a state of the work vehicle or operation information of an operator. The setting processing unit causes the work vehicle to transmit the data to the communication device on the basis of the communication amount set by the setting processing unit.

### ADVANTAGEOUS EFFECTS OF INVENTION

According to the present invention, it is possible to provide a communication control method, a communication control program, and a communication control system capable of reducing a communication load on a communication device capable of wireless communication with a work vehicle, and inhibiting deterioration in workability of a user.

### BRIEF DESCRIPTION OF DRAWINGS

Fig. 1 is a view showing an outline of an automatic traveling system according to an embodiment of the present invention;
Fig. 2 is a block diagram showing a configuration of the automatic traveling system according to the embodiment of the present invention;
Fig. 3 is an external view showing an example of a work vehicle according to the embodiment of the present invention;
Fig. 4 is a diagram showing an example of a map screen displayed on an operation terminal according to the embodiment of the present invention;
Fig. 5 is a diagram showing an example of a map screen displayed on the operation terminal according to the embodiment of the present invention;
Fig. 6 is a diagram showing an example of a map screen displayed on the operation terminal according to the embodiment of the present invention;
Fig. 7A is a diagram showing an example of an operation screen displayed on the operation terminal according to the embodiment of the present invention;
Fig. 7B is a diagram showing an example of an operation screen displayed on the operation terminal according to the embodiment of the present invention;
Fig. 7C is a diagram showing an example of an operation screen displayed on the operation terminal according to the embodiment of the present invention;
Fig. 8 is a diagram showing an example of a map screen and an operation screen displayed on the operation terminal according to the embodiment of the present invention;
Fig. 9 is a block diagram showing a configuration of a management server according to the embodiment of the present invention;
Fig. 10 is a table showing an example of vehicle registration information registered in the automatic traveling system according to the embodiment of the present invention;
Fig. 11 is a schematic diagram for explaining a method of setting a communication amount according to a first example of the present invention;
Fig. 12 is a schematic diagram for explaining a method of setting a communication amount according to a second example of the present invention;
Fig. 13 is a schematic diagram for explaining a method of setting a communication amount according to a fourth example of the present invention;
Fig. 14 is a schematic diagram for explaining a method of setting a communication amount according to a sixth example of the present invention; and
Fig. 15 is a flowchart showing an example of a procedure of automatic traveling processing executed by the automatic traveling system according to the embodiment of the present invention.

### DESCRIPTION OF EMBODIMENTS

The following embodiment is an embodied example of the present invention, and does not limit the technical scope of the present invention.

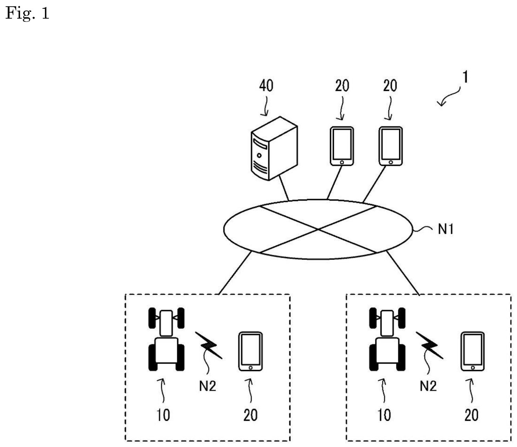

As shown in Fig. 1, an automatic traveling system 1 according to an embodiment of the present invention includes a work vehicle 10, an operation terminal 20, and a management server 40. The number of the work vehicles 10 may be one or more. In addition, the number of the operation terminals 20 may be one or more. In the present embodiment, a case will be described as an example in which the automatic traveling system 1 includes a plurality of work vehicles 10 (in Fig. 1, two work vehicles 10 are shown). Note that, in the present invention, the number of the work vehicles 10 may be one. The automatic traveling system 1 is a system capable of controlling an operation of the work vehicle 10 by using the operation terminal 20. The management server 40 controls the work vehicle 10 and the operation terminal 20.

The work vehicle 10, the operation terminal 20, and the management server 40 can communicate with each other via a communication network N1. For example, the work vehicle 10 and the operation terminal 20 can communicate via the management server 40. For example, each of the work vehicle 10 and the operation terminal 20 is connected to the management server 40 via a mobile telephone network, a packet network, or a wireless LAN. In addition, the work vehicle 10 and the operation terminal 20 may be able to communicate without the management server 40. For example, the work vehicle 10 and the operation terminal 20 may be able to communicate via short-distance wireless communication (communication network N2) such as Bluetooth (registered trademark), wireless LAN, or infrared communication. The operation terminal 20 connected to the work vehicle 10 via the management server 40 functions as a long-distance operation terminal (long-distance mode), and the operation terminal 20 connected to the work vehicle 10 without the management server 40 functions as a short-distance operation terminal (short-distance mode).

In the present embodiment, a case where the work vehicle 10 is a tractor will be described as an example. Note that, as another embodiment, the work vehicle 10 may be a combine, a rice transplanter, a sprayer, or the like. That is, the work vehicle of the present invention is a work vehicle that performs agricultural work. The work vehicles 10 may be vehicles of different types, or may be vehicles of the same type. The work vehicle 10 has a configuration capable of automatically traveling (autonomously traveling) in a work region of a field in accordance with a preset target route. In addition, the work vehicle 10 can perform predetermined work while automatically traveling in the work region. Moreover, the work vehicle 10 has a configuration capable of automatically traveling a road (connection path) connecting a plurality of fields in accordance with a preset inter-field route.

The work vehicle 10 can automatically travel in accordance with a target route and an inter-field route set in advance inside the field and outside the field (road), on the basis of position information on a current position of the work vehicle 10 calculated by a positioning unit 17. Note that the work vehicle 10 may perform automatic traveling in a state where a worker is on board.

For example, when a target route including a work route, and a travel start position and a travel end position are set in a field, the work vehicle 10 performs predetermined work while automatically traveling along the target route from the travel start position to the travel end position in the field.

In addition, upon completing the work in one field, the work vehicle 10 can move to another field to perform the work. For example, when the work in a first field is finished, the work vehicle 10 automatically travels along an inter-field route preset on the road and moves to a second field. Upon arriving at the second field, the work vehicle 10 performs predetermined work while automatically traveling along a preset target route in the second field.

The target route in the field is appropriately set according to a work content. In addition, the inter-field route of the road is set in advance according to an operation (teaching operation) performed by an operator. The inter-field route may be a road dedicated to a work vehicle or may be a road through which a general vehicle (such as a passenger car) can pass, such as an agricultural road, a forest road, a public road, a private road, or an automobile road.

Here, the work vehicle 10 has a short-distance mode in which the operation of the work vehicle 10 can be controlled within a predetermined range and a long-distance mode in which the operation of the work vehicle 10 can be controlled via the communication network N1 (the Internet or the like) (can be operated via cloud connection), and can set and switch between the short-distance mode and the long-distance mode in accordance with an operation performed by the operator. Note that the short-distance mode may be a mode in which the operation of the work vehicle 10 can be controlled through short-distance communication, and the long-distance mode may be a mode in which the operation of the work vehicle 10 can be controlled through long-distance communication. In addition, the short-distance mode may be a remote control mode, and the long-distance mode may be a smartphone mode. The long-distance mode is an example of a first mode of the present invention, and the short-distance mode is an example of a second mode of the present invention.

The operation terminal 20 is an operation terminal operable by an operator, and is, for example, a smartphone, a tablet terminal, a remote controller, or the like. In the case of the short-distance mode, the operation terminal 20 is operated by an operator (worker or the like) in a range within a predetermined distance from the work vehicle 10 in the field. For example, the worker can operate the operation terminal 20 to start automatic traveling of the work vehicle 10, cause a work machine 14 to ascend and descend, or stop the work vehicle 10 during automatic traveling. When communication with the work vehicle 10 is interrupted due to movement of the operation terminal 20 to an outside of the predetermined range or the like, an operation instruction for the work vehicle 10 by the operation terminal 20 is restricted (prohibited).

Further, in the long-distance mode, the operation terminal 20 is operated by an operator (observer or the like) outside the field (for example, in a remote place). For example, the observer can operate the operation terminal 20 to start automatic traveling of the work vehicle 10, display a state of automatic traveling of the work vehicle 10, display an image obtained by a camera 53 mounted on the work vehicle 10, or stop the work vehicle 10 during automatic traveling. When communication between the operation terminal 20 and the work vehicle 10 is disconnected due to deterioration of a network environment or the like, an operation instruction for the work vehicle 10 made by the operation terminal 20 is restricted (prohibited).

As described above, in the short-distance mode, the operation terminal 20 is mainly used by the worker to give an operation instruction while visually checking the work vehicle 10 in the vicinity of the work vehicle 10. In the long-distance mode, the operation terminal 20 is mainly used by the observer at a place distant from the work vehicle 10 to give an operation instruction while checking (monitoring) the work vehicle 10 by using a camera image.

### [Work vehicle 10]

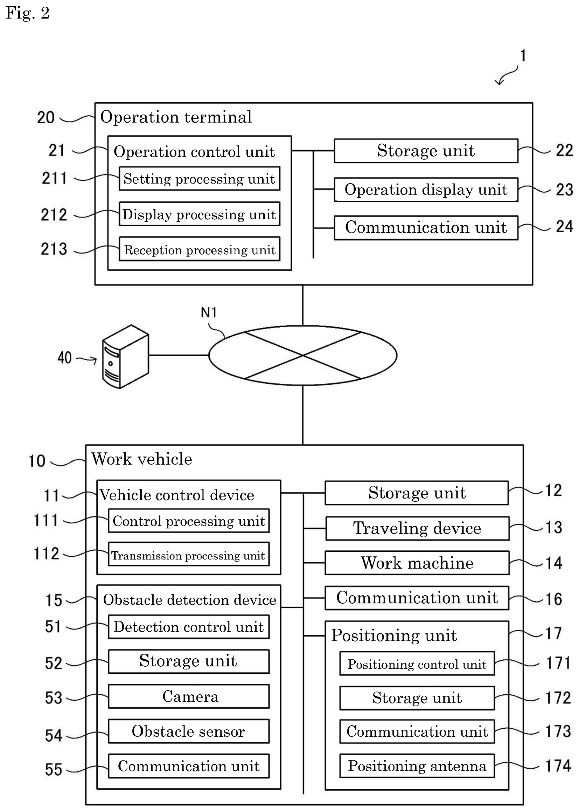

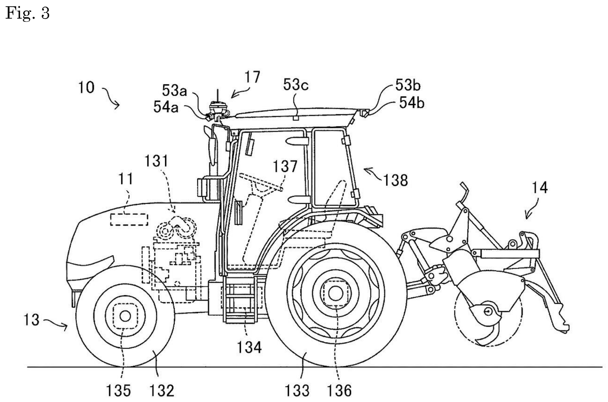

As shown in Figs. 2 and 3, the work vehicle 10 includes a vehicle control device 11, a storage unit 12, a traveling device 13, the work machine 14, an obstacle detection device 15, a communication unit 16, the positioning unit 17, and the like. The vehicle control device 11 is electrically connected to the storage unit 12, the traveling device 13, the work machine 14, the obstacle detection device 15, the positioning unit 17, and the like. Note that the vehicle control device 11 and the obstacle detection device 15 may be capable of wireless communication, and the vehicle control device 11 and the positioning unit 17 may be capable of wireless communication.

The communication unit 16 is a communication interface for connecting the work vehicle 10 to the communication networks N1 and N2 in a wired or wireless manner and executing data communication according to a predetermined communication protocol, with an external device (the management server 40, the operation terminal 20, and the like) via the communication networks N1 and N2.

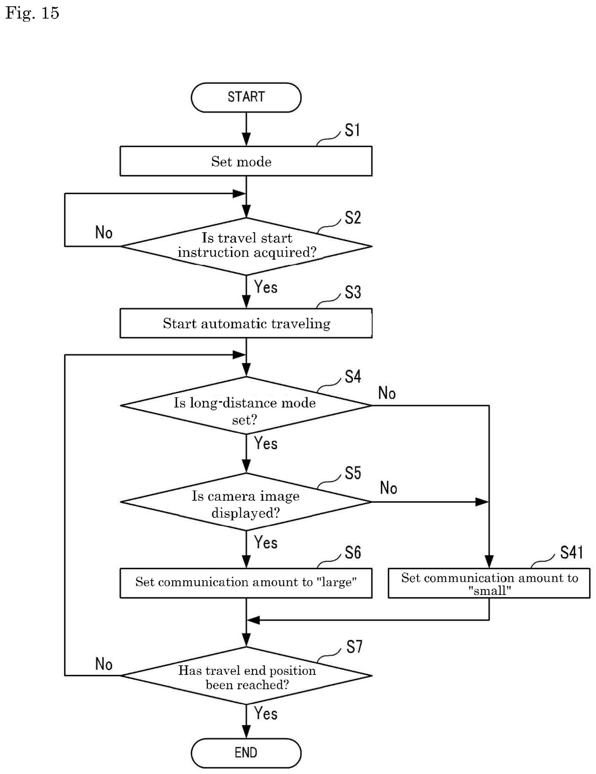

The storage unit 12 is a non-volatile storage unit such as a hard disk drive (HDD), a solid state drive (SSD), or a flash memory that stores various types of information. The storage unit 12 stores a control program such as an automatic traveling program for causing the vehicle control device 11 to execute automatic traveling processing (see Fig. 15) to be described later. For example, the automatic traveling program is non-temporarily recorded in a computer-readable recording medium such as a CD or a DVD, and is read by a predetermined reading device (not shown) and stored in the storage unit 12. Note that the automatic traveling program may be downloaded from a server (not shown) to the work vehicle 10 via the communication network N1 and stored in the storage unit 12. Further, the storage unit 12 also stores target route data and the like.

The traveling device 13 is a driving unit that causes the work vehicle 10 to travel. As shown in Fig. 3, the traveling device 13 includes an engine 131, front wheels 132, rear wheels 133, a transmission 134, a front axle 135, a rear axle 136, a steering wheel 137, and the like. Note that the front wheels 132 and the rear wheels 133 are provided individually on the left and right of the work vehicle 10. Further, the traveling device 13 is not limited to a wheel type including the front wheels 132 and the rear wheels 133, and may be a crawler type including crawlers provided on the left and right of the work vehicle 10.

The engine 131 is a driving source such as a diesel engine or a gasoline engine driven using fuel supplied to a fuel tank (not shown). The traveling device 13 may include an electric motor as a drive source together with the engine 131 or instead of the engine 131. Note that a generator (not shown) is connected to the engine 131, and electric power is supplied from the generator to electric components such as the vehicle control device 11, the obstacle detection device 15, and the positioning unit 17 provided in the work vehicle 10, a battery, and the like. Note that, the battery is charged with electric power supplied from the generator. Then, electric components such as the vehicle control device 11, the obstacle detection device 15, and the positioning unit 17 provided in the work vehicle 10 can be driven by electric power supplied from the battery even after the engine 131 is stopped.

A driving force of the engine 131 is transmitted to the front wheels 132 via the transmission 134 and the front axle 135, and is transmitted to the rear wheels 133 via the transmission 134 and the rear axle 136. Further, a driving force of the engine 131 is also transmitted to the work machine 14 via a PTO shaft (not shown). When the work vehicle 10 performs automatic traveling, the traveling device 13 performs a traveling operation in accordance with a command from the vehicle control device 11. In addition, the traveling device 13 decelerates or stops the work vehicle 10 in accordance with a command from the vehicle control device 11.

The work machine 14 is, for example, a tiller, a mower, a plow, a fertilizing machine, a sprayer (chemical sprayer), a puddling device, or a seeding machine, and is detachable from the work vehicle 10. Thus, the work vehicle 10 can perform various types of work by using each of the work machines 14. Fig. 3 shows a case where the work machine 14 is a tiller.

The steering wheel 137 is an operation unit operated by the worker or the vehicle control device 11. For example, in the traveling device 13, an angle of the front wheels 132 is changed by a hydraulic power steering mechanism (not shown) or the like in accordance with an operation of the steering wheel 137 by the vehicle control device 11, and a traveling direction of the work vehicle 10 is changed.

In addition to the steering wheel 137, the traveling device 13 includes a shift lever, an accelerator, a brake, and the like (not shown) operated by the vehicle control device 11. Then, in the traveling device 13, a gear of the transmission 134 is switched to a forward gear, a back gear, or the like in accordance with an operation of the shift lever by the vehicle control device 11, and a traveling mode of the work vehicle 10 is switched to forward or backward. Further, the vehicle control device 11 operates the accelerator to control a rotation speed of the engine 131. Further, the vehicle control device 11 operates the brake to brake rotation of the front wheels 132 and the rear wheels 133 by using an electromagnetic brake.

The positioning unit 17 is a communication device including a positioning control unit 171, a storage unit 172, a communication unit 173, a positioning antenna 174, and the like. For example, as shown in Fig. 2, the positioning unit 17 is provided in an upper portion of a cabin 138 on which the worker boards. Further, the positioning unit 17 is not necessarily installed in the cabin 138. Moreover, the positioning control unit 171, the storage unit 172, the communication unit 173, and the positioning antenna 174 of the positioning unit 17 may be dispersedly disposed at different positions in the work vehicle 10. Note that, as described above, the battery is connected to the positioning unit 17, and the positioning unit 17 can operate even while the engine 131 is stopped. Furthermore, as the positioning unit 17, for example, a mobile phone terminal, a smartphone, a tablet terminal, a quantum compass, or the like may be substituted.

The positioning control unit 171 is a computer system including one or a plurality of processors and a storage memory such as a non-volatile memory and a RAM. The storage unit 172 is a non-volatile memory or the like that stores data such as a program for causing the positioning control unit 171 to execute positioning processing, positioning information, and movement information. For example, the program is non-temporarily recorded in a computer-readable recording medium such as a CD or a DVD, and is read by a predetermined reading device (not shown) and stored in the storage unit 172. Note that the program may be downloaded from a server (not shown) to the positioning unit 17 via the communication network N1 and stored in the storage unit 172.

The communication unit 173 is a communication interface for connecting the positioning unit 17 to the communication network N1 in a wired or wireless manner and executing data communication according to a predetermined communication protocol, with an external device such as a base station server via the communication network N1.

The positioning antenna 174 is an antenna that receives a radio wave (GNSS signal) transmitted from a satellite.

The positioning control unit 171 calculates a current position of the work vehicle 10 on the basis of the GNSS signal received by the positioning antenna 174 from the satellite. For example, in a case where the work vehicle 10 automatically travels in a field, when the positioning antenna 174 receives radio waves (transmission time, track information, or the like) transmitted from each of a plurality of satellites, the positioning control unit 171 calculates a distance between the positioning antenna 174 and each satellite, and calculates the current position (latitude and longitude) of the work vehicle 10 on the basis of the calculated distance. In addition, the positioning control unit 171 may perform positioning by a real-time kinematic method (RTK-GNSS positioning method (RTK method)) in which the current position of the work vehicle 10 is calculated using correction information corresponding to a base station (reference station) close to the work vehicle 10. In this manner, the work vehicle 10 performs automatic traveling using the positioning information obtained by the RTK method. Note that the current position of the work vehicle 10 may be the same position as a positioning position (for example, a position of the positioning antenna 174) or may be a position shifted from the positioning position. Note that the positioning control unit 171 may calculate (position) the current position of the work vehicle 10 by using a quantum compass.

When the work vehicle 10 detects a detection target during automatic traveling, the obstacle detection device 15 outputs detection information (measurement information) to the vehicle control device 11. Specifically, the obstacle detection device 15 includes a detection control unit 51, a storage unit 42, the camera 53, an obstacle sensor 54, a communication unit 55, and the like. The obstacle detection device 15 may be configured by one unit and mounted on the work vehicle 10, or a plurality of components may be dispersedly disposed on the work vehicle 10.

The communication unit 55 is a communication interface for connecting the obstacle detection device 15 to the communication networks N1 and N2 in a wired or wireless manner and executing data communication according to a predetermined communication protocol, with an external device (the management server 40, the operation terminal 20, and the like) via the communication networks N1 and N2.

The storage unit 42 is a non-volatile storage unit such as an HDD, an SSD, or a flash memory that stores various types of information. The storage unit 42 stores a control program for causing the obstacle detection device 15 to execute predetermined processing. For example, the control program is non-temporarily recorded in a computer-readable recording medium such as a CD or a DVD, and is read by a predetermined reading device (not shown) and stored in the storage unit 42. Note that the control program may be downloaded from a server (not shown) to the obstacle detection device 15 via the communication network N1 and stored in the storage unit 42.

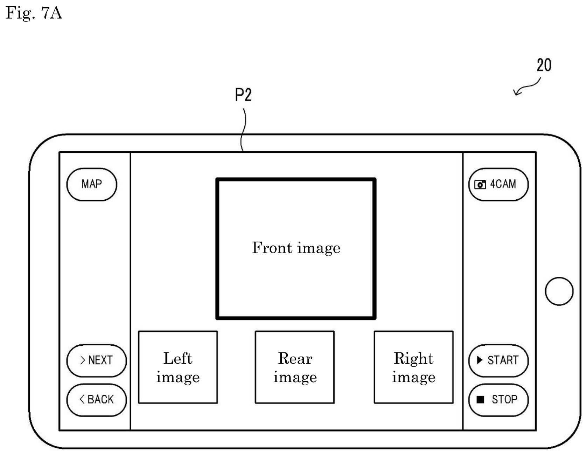

The camera 53 is a digital camera that captures an image of a subject included in a predetermined imaging range and outputs the captured image as digital image data. The camera 53 continuously images the subject at a predetermined frame rate, generates a frame image (captured image) having a predetermined resolution, and sequentially transmits the frame image to the detection control unit 51. In addition, the camera 53 transmits image data of the captured image to the operation terminal 20 via the communication unit 55. The operation terminal 20 can display the captured image on an operation screen of an operation display unit 23 (see Fig. 7A and the like).

The camera 53 includes: a front camera 53a capable of capturing an image of an imaging range in front of the work vehicle 10; a rear camera 53b capable of capturing an image of a rear imaging range as viewed from the work vehicle 10; a left-side camera 53c capable of capturing an image of an imaging range on a left side as viewed from the work vehicle 10; and a right-side camera (not shown) capable of capturing an image of an imaging range on a right side as viewed from the work vehicle 10. As shown in Fig. 3, the front camera 53a is disposed on an upper front side of the cabin 138, the rear camera 53b is disposed on an upper rear side of the cabin 138, the left-side camera 53c is disposed on an upper left side of the cabin 138, and the right-side camera is disposed on an upper right side of the cabin 138. Note that the camera 53 may include the front camera 53a and the rear camera 53b alone. Furthermore, the camera 53 may be an omnidirectional camera including one camera and capable of capturing images in all directions around the work vehicle 10.

The obstacle sensor 54 is a sensor that detects a detection target in a predetermined detection range by using infrared rays, ultrasonic waves, or the like. For example, the obstacle sensor 54 may be a lidar sensor (distance sensor) capable of measuring a distance to a detection target in three dimensions by using a laser, or may be a sonar sensor including a plurality of sonars capable of measuring a distance to a detection target by using an ultrasonic wave. The obstacle sensor 54 is installed at a center front portion, a center rear portion, or the like of a machine body of the work vehicle 10, and monitors the surroundings of the work vehicle 10 to detect an obstacle. In the present embodiment, a case will be described as an example in which the obstacle sensor 54 includes a front obstacle sensor 54a capable of detecting a detection target in detection ranges of the front and sides (left and right) as viewed from the work vehicle 10, and a rear obstacle sensor 54b capable of detecting a detection target in detection ranges of the rear and sides (left and right) as viewed from the work vehicle 10. As shown in Fig. 3, the front obstacle sensor 54a is disposed on an upper front side of the cabin 138, and the rear obstacle sensor 54b is disposed on an upper rear side of the cabin 138. A detection target in a detection range of 360 degrees around the work vehicle 10 can be detected by the front obstacle sensor 54a and the rear obstacle sensor 54b. The front camera 53a and the front obstacle sensor 54a may be configured by one unit, and the rear camera 53b and the rear obstacle sensor 54b may be configured by one unit. Note that the obstacle sensor 54 may include: a left obstacle sensor capable of detecting a detection target in a detection range on a left side as viewed from the work vehicle 10; and a right obstacle sensor capable of detecting a detection target in a detection range on a right side as viewed from the work vehicle 10.

The obstacle sensor 54 measures a distance to each distance measurement point (measurement target) present in the measurement range by using, for example, a laser (near-infrared laser light or the like), and generates a distance image on the basis of the measurement information. The obstacle sensor 54 includes an electronic control unit in which a microcontroller and the like are integrated, a processing unit constructed by various control programs, and the like, and is connected to the detection control unit 51, the vehicle control device 11, and the like via a CAN so as to be able to communicate with each other.

The obstacle sensor 54 measures a distance from the obstacle sensor 54 to a distance measurement point in a measurement range by a time of flight (TOF) method of measuring the distance to the distance measurement point on the basis of a round-trip time until the emitted laser reaches the distance measurement point and returns. The obstacle sensor 54 performs three-dimensional measurement in the measurement range by scanning laser vertically and horizontally at a high speed over the entire measurement range, and sequentially measuring the distance to the distance measurement point for each scanning angle (coordinates). The obstacle sensor 54 sequentially measures intensity (reflection intensity) of the reflected light from each distance measurement point obtained by vertically and horizontally scanning the laser at a high speed over the entire measurement range. The obstacle sensor 54 repeatedly measures a distance to each distance measurement point of the measurement range, each reflection intensity, and the like in real time.

The obstacle sensor 54 generates a distance image and extracts a distance measurement point group estimated as an obstacle from measurement information such as a measured distance to each distance measurement point and a scanning angle (coordinates) with respect to each distance measurement point, and transmits the extracted measurement information regarding the distance measurement point group to the detection control unit 51 as the measurement information regarding the obstacle.

Further, a control range corresponding to a distance from the work vehicle 10 is set as a measurement range (detection range) of the obstacle sensor 54. For example, in the measurement range, a range in which a distance from the work vehicle 10 is L1 is set as a stop control range, a range from the distance L1 to a distance L2 is set as a deceleration control range, and a range from the distance L2 to a distance L3 is set as a notification control range (where L1 < L2 < L3). Note that, each control range can be set according to a type, a model, a work content, a vehicle speed, and the like of the work vehicle 10. Further, the control range may be switchable depending on a traveling direction of the work vehicle 10. For example, the detection control unit 51 sets the control range to a front side of the machine body when the work vehicle 10 is traveling forward, and sets the control range to a rear side of the machine body when the work vehicle 10 is traveling backward.

The detection control unit 51 outputs the measurement information acquired from the obstacle sensor 54 to the vehicle control device 11. The detection control unit 51 sequentially outputs the measurement information to the vehicle control device 11 every time the measurement information is acquired from the obstacle sensor 54 while the work vehicle 10 automatically travels. As another embodiment, the detection control unit 51 may determine a type (a person, a vehicle, a structure, a material, or the like) of a detection target (measurement target) on the basis of the captured image acquired from the camera 53 and the measurement information acquired from the obstacle sensor 54, and output the determination result to the vehicle control device 11.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the vehicle control device 11 controls the work vehicle 10 by executing, with the CPU, various control programs stored in advance in the ROM or the storage unit 12.

Specifically, as shown in Fig. 2, the vehicle control device 11 includes processing units such as a control processing unit 111 and a transmission processing unit 112. Note that, the vehicle control device 11 functions as the various processing units by executing various types of processing according to the automatic traveling program with the CPU. In addition, some or all of the processing units may include an electronic circuit. Note that, the automatic traveling program may be a program for causing a plurality of processors to function as the processing unit.

The control processing unit 111 controls an operation of the work vehicle 10. For example, when a travel mode of the work vehicle 10 is automatic traveling (automatic traveling mode), the control processing unit 111 causes the work vehicle 10 to automatically travel on the basis of position information (positioning information) indicating a current position of the work vehicle 10 measured by the positioning unit 17. For example, when the work vehicle 10 satisfies a start condition for automatic traveling and acquires a travel start instruction from the operator (operation terminal), the control processing unit 111 starts automatic traveling of the work vehicle 10 on the basis of the positioning information. For example, the control processing unit 111 causes the work vehicle 10 to automatically travel from a travel start position to a travel end position in accordance with a target route generated and set in advance.

In addition, when the control processing unit 111 acquires a stop instruction from the operator during automatic traveling of the work vehicle 10, the control processing unit 111 stops automatic traveling of the work vehicle 10.

Note that, when the travel mode of the work vehicle 10 is manual traveling (manual traveling mode), the work vehicle 10 can be caused to manually travel on the basis of an operation (manual steering) of an occupant (worker). For example, the control processing unit 111 acquires operation information corresponding to a driving operation such as a steering wheel operation, a shift operation, a traveling direction switching operation, and a brake operation performed by the worker, and causes the traveling device 13 to execute a traveling operation on the basis of the operation information.

Further, when the work vehicle 10 detects an obstacle during automatic traveling, the control processing unit 111 causes the work vehicle 10 to execute a predetermined countermeasure processing. Specifically, when an obstacle is detected in the notification control range, the control processing unit 111 causes the work vehicle 10 to generate a warning sound. Further, when an obstacle is detected in the deceleration control range, the control processing unit 111 decelerates the work vehicle 10 during automatic traveling from a preset vehicle speed. Further, when an obstacle is detected in the stop control range, the control processing unit 111 temporarily stops (stops) the work vehicle 10 during automatic traveling. Note that, the control processing unit 111 may cause the work vehicle 10 to execute countermeasure processing according to the type of the detection target detected by the obstacle detection device 15.

In addition, the control processing unit 111 changes a vehicle speed of the work vehicle 10 during automatic traveling. For example, the control processing unit 111 increases the vehicle speed in accordance with an accelerating operation performed by the operator at the operation terminal 20, and decreases the vehicle speed in accordance with a decelerating operation performed by the operator at the operation terminal 20. In addition, the control processing unit 111 changes an engine speed of the work vehicle 10 during automatic traveling, in accordance with an operation performed by the operator at the operation terminal. Further, the control processing unit 111 causes the work machine 14 to ascend and descend according to an operation performed by the operator at the operation terminal.

In this manner, the control processing unit 111 controls the operation of the work vehicle 10 according to the operation performed by the operator at the operation terminal 20 and a manual operation performed by an occupant of the vehicle.

Furthermore, the control processing unit 111 can set or switch between the short-distance mode and the long-distance mode according to an operation performed by the operator. The control processing unit 111 may set the short-distance mode and the long-distance mode in accordance with an operation (mode setting/switching operation) performed by the operator on an operation terminal (the present terminal) mounted on the work vehicle 10, for example. In addition, the control processing unit 111 can control the operation of the work vehicle 10 in accordance with the set mode.

The transmission processing unit 112 transmits data related to the work vehicle 10 and work, to the management server 40 or the operation terminal 20. For example, the transmission processing unit 112 transmits data such as a vehicle speed, an engine load, an engine speed, a travel history, and a work history of the work vehicle 10 to the management server 40 or the operation terminal 20. In addition, the transmission processing unit 112 transmits the data to the management server 40 or the operation terminal 20 on the basis of a communication amount set by the management server 40 (details will be described later). The communication amount is a data amount (communication speed × time) of data transmitted per unit time by the work vehicle 10. The transmission processing unit 112 is an example of a transmission processing unit of the present invention.

### [Operation terminal 20]

As shown in Fig. 2, the operation terminal 20 is an information processing apparatus including an operation control unit 21, a storage unit 22, the operation display unit 23, a communication unit 24, and the like. For example, the operation terminal 20 is configured by a portable terminal such as a smartphone or a tablet terminal.

The communication unit 24 is a communication interface for connecting the operation terminal 20 to the communication network N1 in a wired or wireless manner and executing data communication according to a predetermined communication protocol, with an external device such as one or a plurality of work vehicles 10 and the management server 40 via the communication network N1. The operation terminal 20 communicates with the work vehicle 10 via the management server 40 by, for example, wireless communication (the Internet or the like) of the communication unit 24. Further, the operation terminal 20 communicates with the work vehicle 10 by, for example, short-distance wireless communication (Bluetooth or the like) of the communication unit 24.

The operation display unit 23 is a user interface including a display unit such as a liquid crystal display or an organic EL display that displays various types of information, and an operation unit such as a touch panel, a mouse, or a keyboard that receives an operation. The display unit displays a map of a predetermined area including a work target field, predetermined information regarding the work vehicle 10, and the like. The predetermined information includes at least one of information regarding a current surrounding environment of the work vehicle 10, information regarding a current traveling status of the work vehicle 10, and information regarding a current work status of the work vehicle 10. In the long-distance mode, on the basis of the predetermined information displayed on the operation terminal 20, the operator (observer) can grasp a travel state of the work vehicle 10 that automatically travels in a field, a road, or the like, a detection result of an obstacle, and the like, at a place distant from the work vehicle 10. That is, in the long-distance mode, the observer can remotely monitor the work vehicle 10 by using the operation terminal 20.

In addition, the display unit displays an operation screen for giving a travel start instruction, a travel stop instruction, a travel restart instruction, and the like to the work vehicle 10. In addition, a registration screen for registering work vehicle information, field information, work information, and the like is displayed on the display unit.

The storage unit 22 is a non-volatile storage unit such as an HDD, an SSD, or a flash memory that stores various types of information. The storage unit 22 stores a control program such as a control program for causing the operation control unit 21 to execute various types of processing. For example, the control program is non-temporarily recorded in a computer-readable recording medium such as a CD or a DVD, and is read by a predetermined reading device (not shown) and stored in the storage unit 22. Note that the control program may be downloaded from a server (not shown) to the operation terminal 20 via the communication network N1 and stored in the storage unit 22.

In addition, the storage unit 22 stores data such as work vehicle information which is information regarding the work vehicle 10 and target route information which is information regarding a target route. The work vehicle information includes information such as a vehicle number and a type for each work vehicle 10. The vehicle number is identification information on the work vehicle 10. The type is a type of the work vehicle 10. Note that, the storage unit 22 may store the work vehicle information regarding one work vehicle 10, or may store the work vehicle information regarding a plurality of work vehicles 10.

The target route information includes, for each target route, information such as a route name, a field name, an address, a field area, and a work time. The route name is a route name of a target route. The field name is a name of a work target field to which the target route is set. The address is an address of the field, and the field area is an area of the field. The work time is a time required for the work of the field by the work vehicle 10.

In a case where the target route is a route corresponding to a road (inter-field route), the target route information includes information such as a route name, an address, a travel distance, and a travel time. The route name is a name of a road, and the address is an address of the road. The travel distance is a distance by which the work vehicle 10 travels on the road, and is, for example, a distance from a first field to a second field. The travel time is a time during which the work vehicle 10 travels on the road, and is, for example, a time required for movement from the first field to the second field.

Note that the storage unit 22 may store the target route information regarding one target route, or may store the target route information regarding a plurality of target routes. For example, when the operator generates a plurality of target routes for one or a plurality of fields managed by the operator, the target route information regarding each target route is stored in the storage unit 22. Note that, for one field, one target route may be set, or a plurality of target routes may be set. In addition, for one set of fields, one inter-field route may be set or a plurality of inter-field routes may be set. In the present embodiment, the storage unit 22 stores target route information corresponding to a target route on which a work vehicle 10a travels in the first field and target route information corresponding to a target route on which a work vehicle 10b travels in the second field.

As another embodiment, some or all of information such as the work vehicle information and the target route information may be stored in a server (management server 40) accessible from the operation terminal 20. The operator may perform an operation of registering the work vehicle information and the target route information in the management server 40. In this case, the operation control unit 21 may acquire the information from the management server 40 and execute each process.

The operation control unit 21 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work region) for various types of processing executed by the CPU. Then, the operation control unit 21 controls the operation terminal 20 by executing, with the CPU, various control programs stored in advance in the ROM or the storage unit 22.

As shown in Fig. 2, the operation control unit 21 includes various processing units such as a setting processing unit 211, a display processing unit 212, and a reception processing unit 213. Note that the operation control unit 21 functions as the various processing units by executing, with the CPU, various types of processing according to a control program. In addition, some or all of the processing units may include an electronic circuit. Note that the control program may be a program for causing a plurality of processors to function as the processing unit.

The setting processing unit 211 sets information regarding the work vehicle 10 (hereinafter, referred to as work vehicle information), information regarding the field (hereinafter, referred to as field information), and information regarding how to specifically perform work (hereinafter referred to as work information).

Specifically, when the operator performs a registration operation on the operation terminal 20, the setting processing unit 211 sets information such as a model of the work vehicle 10, a position where the positioning antenna 174 is attached in the work vehicle 10, a type of the work machine 14, a size and a shape of the work machine 14, a position of the work machine 14 with respect to the work vehicle 10, a vehicle speed and an engine speed during work of the work vehicle 10, and a vehicle speed and an engine speed during turning of the work vehicle 10.

In addition, when a registration operation is performed on the operation terminal 20, the setting processing unit 211 sets information such as a location and a shape of the field, a work start position (travel start position) at which work is started, a work end position (travel end position) at which work is ended, and a work direction.

The information on the location and the shape of the field can be automatically acquired, for example, when the operator boards on the work vehicle 10 and drives the work vehicle 10 so as to make one round along an outer periphery of the field, and records a transition of position information on the positioning antenna 174 at that time. In addition, the location and the shape of the field can also be acquired on the basis of a polygon obtained by the worker operating the operation terminal 20 and designating a plurality of points on a map in a state where the map is displayed on the operation terminal 20.

In addition, the setting processing unit 211 is configured to be able to set, as the work information, the presence or absence of cooperative work between the work vehicle 10 (unmanned tractor) and a manned work vehicle 10, the number of skips which is the number of work routes to be skipped when the work vehicle 10 turns in a headland, a width of the headland, a width of a non-cultivated land, and the like.

In addition, the setting processing unit 211 generates a target route on which the work vehicle 10 automatically travels in the field, on the basis of the setting information. Specifically, the setting processing unit 211 generates a target route in the field on the basis of the travel start position and the travel end position registered in the field setting. For example, the setting processing unit 211 generates a target route including a travel start position, a travel end position, a straight route, and a turning route, on the basis of a setting operation performed by the operator. The setting processing unit 211 registers the generated target route in association with the field. In addition, the setting processing unit 211 outputs route data of the target route to the work vehicle 10.

As another embodiment, the setting processing unit 211 may be included in another device such as the management server 40, and another device may set the each piece of information.

The display processing unit 212 displays various types of information on the operation display unit 23. Specifically, the display processing unit 212 displays the work vehicle 10 registered in advance, on a map screen P1 selectable by the operator. For example, in a case where the observer registers the work vehicle 10 as a monitoring target (management target), the display processing unit 212 displays the work vehicle 10 on the map screen P1 to be selectable. The work vehicle 10 displayed on the map screen P1 may be the work vehicle 10 whose information is registered in the operation terminal 20, or may be the work vehicle 10 selected by the observer to start work from now among the registered plurality of work vehicles 10. Further, the work vehicle 10 displayed on the map screen P1 may be all the work vehicles 10 registered in the management server 40. In this case, the display processing unit 212 may display the work vehicle 10 as a monitoring target of the own terminal (operation terminal 20) to be identifiable.

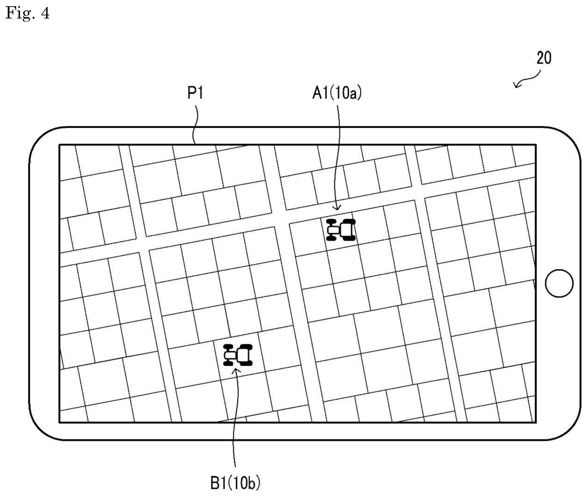

Fig. 4 shows an example of the map screen P1. As shown in Fig. 4, on the map screen P1, the display processing unit 212 displays a map of a predetermined area including respective current positions of the two work vehicles (work vehicles 10a and 10b) registered in advance. In addition, on the map, the display processing unit 212 displays identification information on the work vehicle 10 at a position corresponding to the current position of the work vehicle 10. Specifically, as shown in Fig. 4, on the map, the display processing unit 212 displays an icon image A1 of the work vehicle 10a at a position corresponding to the current position of the work vehicle 10a and displays an icon image B1 of the work vehicle 10b at a position corresponding to the current position of the work vehicle 10b. The display processing unit 212 acquires position information (positioning information) from the work vehicle 10, and displays the icon image of the work vehicle 10 on the map. The display processing unit 212 updates the position of the icon image on the map in real time. As another embodiment, the display processing unit 212 may display a name (text information) of the work vehicle 10a on the map instead of the icon image.

In addition, the display processing unit 212 may display the icon image A1 of the work vehicle 10a and the icon image B1 of the work vehicle 10b to be distinguishable. For example, the display processing unit 212 may display the name of the work vehicle 10a near the icon image A1, and display the name of the work vehicle 10b near the icon image B1. In addition, the display processing unit 212 may display identification information (name or the like) of the work vehicle 10a when the observer performs a touch operation or a mouse over operation on the icon image A1, and display identification information (name or the like) of the work vehicle 10b when the observer performs a touch operation or a mouse over operation on the icon image B1.

In addition, the display processing unit 212 may enlarge or reduce the map to display on the map screen P1 in accordance with an operation of enlarging or reducing the map. Further, the display processing unit 212 may automatically adjust a display magnification in accordance with a position of the work vehicle 10 as a monitoring target. For example, the display processing unit 212 determines the display magnification of the map such that the icon images of all the work vehicles 10 as monitoring targets are contained in one screen (the same page).

According to the map screen P1 shown in Fig. 4, the observer can grasp the current positions of all the work vehicles 10 as monitoring targets. Note that the display processing unit 212 may be configured to display, on the map screen P1, the work vehicle 10 that is not working and is being stored in a storage place (such as a warehouse), or may be configured not to display, on the map screen P1, the work vehicle 10 that is not working and is being stored in the storage place. Further, the observer may set whether or not to display, on the map screen P1, the work vehicle 10 that is not working and is being stored in the storage place.

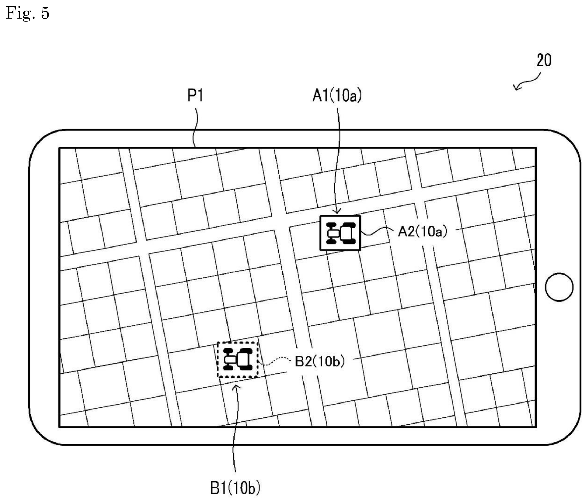

In addition, the display processing unit 212 displays the identification information on the map in a display mode according to a current state of the work vehicle 10. Specifically, the display processing unit 212 causes the icon image to be displayed on the map to allow identification as to whether the work vehicle 10 is in automatic traveling or is stopped. That is, the display processing unit 212 makes a difference on the map between a display mode of a case where the work vehicle 10 is in automatic traveling and a display mode of a case where the work vehicle 10 is stopped. In the example shown in Fig. 5, when the work vehicle 10a is stopped, the display processing unit 212 displays the icon image A1 in a mode indicating that the work vehicle 10a is stopped. Further, when the work vehicle 10b is in automatic traveling, the display processing unit 212 displays the icon image B1 in a mode indicating that the work vehicle 10b is in automatic traveling. Note that the display mode may be a line type, a color, a thickness, or the like of a frame image surrounding the icon image, or may be a color, a size, a display method (lighting, flashing), or the like of the icon image. For example, as shown in Fig. 5, the display processing unit 212 displays a frame image A2 of the icon image A1 and a frame image B2 of the icon image B1 in display modes different from each other.

As another embodiment, the display processing unit 212 may hide the frame image when the work vehicle 10 is in automatic traveling normally, and display the frame image when the work vehicle 10 stops automatic traveling.

In addition, the display processing unit 212 may display a message (text information) indicating that automatic traveling is stopped in the vicinity of the icon image A1, and display a message indicating that the vehicle is automatically traveling in the vicinity of the icon image B1. Further, the display processing unit 212 may display a message indicating that automatic traveling is stopped when the operator performs a touch operation or a mouse over operation on the icon image A1, and display a message indicating that the vehicle is in automatic traveling when the operator performs a touch operation or a mouse over operation on the icon image B1.

Note that, the work vehicle 10 stops automatic traveling, for example, when an obstacle is detected, when the work is ended, when a remaining amount of a spray material or fuel becomes less than a specified amount, when a yield of a harvested product becomes equal to or greater than a specified amount, when regeneration work of a diesel particulate filter (DPF) is required, when urea water supply work is required, and the like.

As another embodiment, the display processing unit 212 may display, on the map screen P1, identification information indicating that an obstacle has been detected when the obstacle has been detected. For example, when the work vehicle 10a detects an obstacle, the display processing unit 212 turns on or blinks the icon image A1 or displays the frame image A2 of the icon image A1 in a predetermined color. In addition, the display processing unit 212 may display the icon image A1 or the frame image A2 in a display mode according to a detection position (control range) when the work vehicle 10a detects an obstacle. For example, the display processing unit 212 displays the frame image A2 in green when the work vehicle 10a detects an obstacle in the notification control range, the display processing unit 212 displays the frame image A2 in yellow when the work vehicle 10a detects an obstacle in the deceleration control range, and the display processing unit 212 displays the frame image A2 in red when the work vehicle 10a detects an obstacle in the stop control range.

In addition, the display processing unit 212 may display identification information showing a work status on the map screen P1. For example, when the work vehicle 10a finishes work in the work target field, the display processing unit 212 turns on or blinks the icon image A1 or displays the frame image A2 of the icon image A1 in a predetermined color. Further, for example, in a case where the work vehicle 10a is a vehicle (sprayer) that sprays a spray material (chemical liquid, water, or the like), when a remaining amount of the spray material in the work vehicle 10a becomes less than a specified amount, or when a timing of replenishing the spray material arrives, the display processing unit 212 turns on or blinks the icon image A1 or displays the frame image A2 of the icon image A1 in a predetermined color. Further, for example, in a case where the work vehicle 10a is a vehicle (combine or the like) that harvests a harvested product, when a yield of the harvested product becomes equal to or greater than a specified amount or when a harvest discharge timing arrives, the display processing unit 212 turns on or blinks the icon image A1 or displays the frame image A2 of the icon image A1 in a predetermined color.

As described above, when the work vehicle 10 stops automatic traveling, the display processing unit 212 may display a stop state of the work vehicle 10 on the map screen P1 to be identifiable, and may display identification information that allows a cause of the stop of the work vehicle 10 to be specified, on the map screen P1 when the work vehicle 10 stops the automatic traveling.

According to the map screen P1 shown in Fig. 5, the observer can grasp a current state for each work vehicle 10 as a monitoring target.

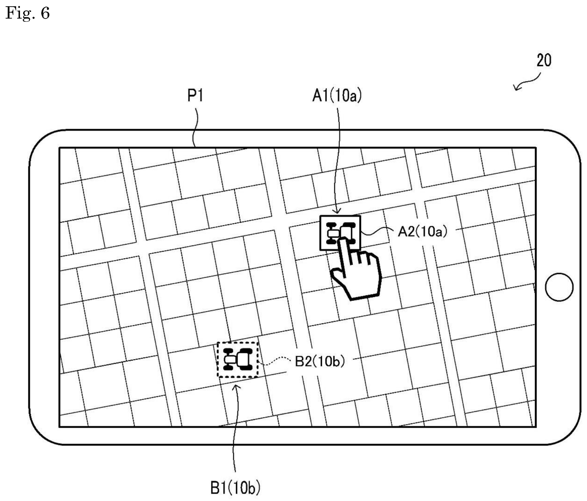

Here, the display processing unit 212 displays the work vehicle 10 to be selectable on the map screen P1 (see Figs. 4 and 5). Specifically, the display processing unit 212 displays the icon images A1 and B1 to be selectable on the map of the map screen P1. The reception processing unit 213 receives an icon image selection operation from the operator on the map screen P1. For example, as shown in Fig. 6, when the observer touches the icon image A1 of the work vehicle 10a displayed on the map screen P1 with a finger, the reception processing unit 213 receives the touch operation. For example, when the observer looks at the map screen P1 and grasps that the work vehicle 10a has stopped automatic traveling, the observer touches the icon image A1 of the work vehicle 10a to check the cause of the stop.

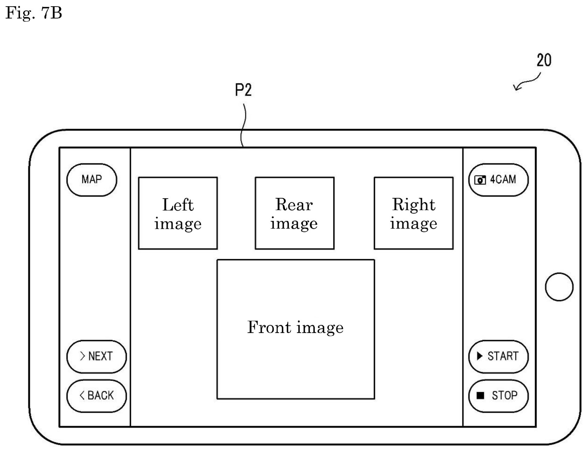

The display processing unit 212 causes the operation display unit 23 to display predetermined information regarding the work vehicle 10 selected by the observer. Specifically, the display processing unit 212 displays the predetermined information on an operation screen P2. The predetermined information includes at least one of information regarding a current surrounding environment of the work vehicle 10, information regarding a current traveling status of the work vehicle 10, and information regarding a current work status of the work vehicle 10. For example, when the observer selects the icon image A1 of the work vehicle 10a (see Fig. 6), the display processing unit 212 causes the operation screen P2 to display a captured image of surroundings of the work vehicle 10a captured by the camera 53 mounted on the work vehicle 10a as shown in Fig. 7A. Here, the display processing unit 212 acquires a front image, a rear image, a left image, and a right image of the work vehicle 10a from the camera 53, and displays the images on the operation screen P2. In addition, as shown in Fig. 7A, the display processing unit 212 displays the front image on an upper side of the operation screen P2, and displays the rear image, the left image, and the right image on a lower side of the operation screen P2. As another embodiment, as shown in Fig. 7B, the display processing unit 212 may display the front image on the lower side of the operation screen P2 and display the rear image, the left image, and the right image on the upper side of the operation screen P2. Further, an arrangement, a size, and display/non-display of each image may be settable (customized) by the operator.

In addition, when the work vehicle 10a detects an obstacle, the display processing unit 212 may display a captured image including the obstacle among a plurality of captured images obtained by the camera 53 to be identified on the operation screen P2. For example, when the obstacle sensor 54 of the work vehicle 10a detects an obstacle in front of the work vehicle 10a, the display processing unit 212 highlights the front image on the operation screen P2 as shown in Fig. 7A.

As described above, on the map of the map screen P1, the display processing unit 212 displays the icon image of each of a plurality of work vehicles 10 registered in advance in a display mode corresponding to a current state of the work vehicle 10 (see Fig. 6), and displays, on the operation screen P2, a captured image obtained by capturing an image of surroundings of the work vehicle 10 with the camera 53 mounted on the work vehicle 10 corresponding to the icon image selected by the observer among the plurality of icon images on the map screen P1 (see Fig. 7A).

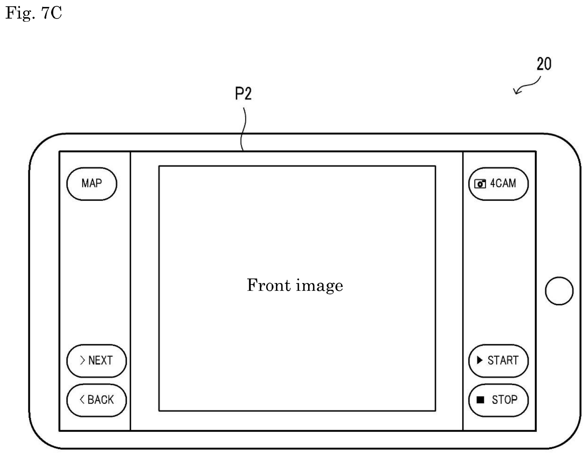

In addition, the display processing unit 212 displays a switch button (a "NEXT" button and a "BACK" button) for switching the display image on the operation screen P2. When the observer presses the "NEXT" button once, the display processing unit 212 enlarges and displays the front image (see Fig. 7C). The display processing unit 212 enlarges and displays the right image when the observer presses the "NEXT" button once next, the display processing unit 212 enlarges and displays the rear image when the observer presses the "NEXT" button once next, and the display processing unit 212 enlarges and displays the left image when the observer presses the "NEXT" button once next. Every time the observer presses the "NEXT" button, the display processing unit 212 switches the front image, the right image, the rear image, and the left image in this order. In addition, every time the observer presses the "BACK" button, the display processing unit 212 switches the front image, the left image, the rear image, and the right image in this order. Further, when the observer presses a "4CAM" button on the operation screen P2 shown in Fig. 7C, the display processing unit 212 displays captured images in the four directions (the front image, the rear image, the left image, and the right image) on the operation screen P2 (see Fig. 7A).

Note that the display processing unit 212 may be able to change (zoom) a display magnification (visual field size) of the captured image on the operation screen P2 shown in Figs. 7A to 7C. For example, on the operation screen P2 shown in Fig. 7C, the display processing unit 212 enlarges and displays (zooms in) the front image when the observer performs an enlargement operation (pinch-out), and the display processing unit 212 reduces and displays (zooms out) the front image when the observer performs a reduction operation (pinch-in). Furthermore, the display processing unit 212 may change an imaging range (imaging direction) of the camera 53 in accordance with an operation performed by the observer.

Furthermore, in the captured image, the display processing unit 212 may highlight the detected obstacle by causing a frame image to surround the detected obstacle, or may track the obstacle. In addition, the display processing unit 212 may display information on a distance to the detected obstacle and information on a type of the obstacle (a person, a vehicle, a structure, a material, or the like) on the operation screen P2. Note that the camera 53 may be disposed such that a part of the vehicle body of the work vehicle 10 appears so that a sense of distance to the detected obstacle can be easily grasped.

Further, the display processing unit 212 displays a "START" button and a "STOP" button on the operation screen P2. When the observer presses the "START" button, the reception processing unit 213 receives the operation, and outputs an instruction (travel start instruction) to start or restart automatic traveling to the work vehicle 10. For example, at a time of starting automatic traveling of the work vehicle 10a, when the observer selects the work vehicle 10a on the map screen P1 (see Fig. 6) and confirms safety around the work vehicle 10a on the operation screen P2, the observer presses the "START" button. As a result, the reception processing unit 213 outputs an instruction (travel start instruction) to cause the work vehicle 10a to start automatic traveling, and the work vehicle 10a starts automatic traveling in accordance with the instruction. Note that the operation control unit 21 may permit the operation of pressing the "START" button when the work vehicle 10 satisfies a start condition for automatic traveling. Further, for example, in a case where the work vehicle 10a detects an obstacle and stops automatic traveling, when the observer selects the work vehicle 10a on the map screen P1 (see Fig. 6) and confirms safety around the work vehicle 10a on the operation screen P2, the observer presses the "START" button. As a result, the reception processing unit 213 outputs an instruction (travel start instruction) to cause the work vehicle 10a to restart automatic traveling, and the work vehicle 10a restarts automatic traveling according to the instruction. As another embodiment, the reception processing unit 213 may permit the operation of pressing the "START" button on condition that an obstacle is no longer detected.

Further, for example, when the observer selects the work vehicle 10b on the map screen P1 and presses the "STOP" button on the operation screen P2 while the work vehicle 10b is in automatic traveling, the reception processing unit 213 outputs a stop instruction (travel stop instruction) to stop automatic traveling to the work vehicle 10b. As a result, the work vehicle 10b stops automatic traveling in accordance with the instruction.

Note that, when the observer presses the "MAP" button on the operation screen P2, the display processing unit 212 switches to the map screen P1 (see Fig. 5). In this manner, the observer can switch between the map screen P1 and the operation screen P2.

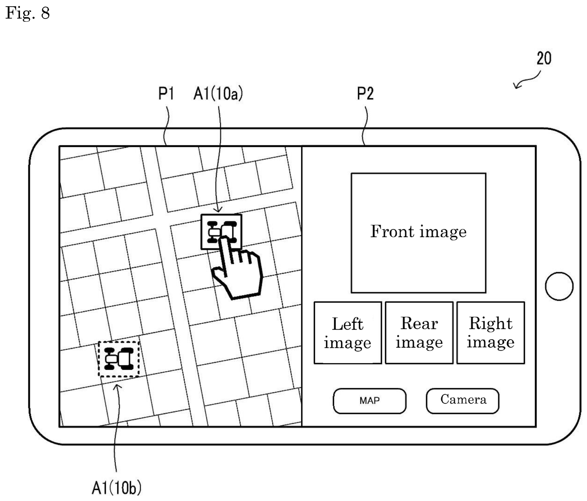

As another embodiment, the display processing unit 212 may display the map screen P1 and the operation screen P2 to be aligned in a left-right direction or an up-down direction. For example, as shown in Fig. 8, the display processing unit 212 displays the map screen P1 in a display region on a left side of the operation display unit 23, and displays the operation screen P2 corresponding to the work vehicle 10a selected on the map screen P1 in a display region on a right side. Further, the display processing unit 212 enlarges and displays the map screen P1 (see Fig. 6) when the observer presses the "MAP" button on the operation screen P2 shown in Fig. 8, and enlarges and displays the operation screen P2 (see Fig. 7A) when the observer presses the "camera" button. Note that, the display processing unit 212 may display the front image on a lower side of the operation screen P2 and display the rear image, the left image, and the right image on an upper side of the operation screen P2. Further, an arrangement, a size, and display/non-display of each image may be settable (customized) by the observer.

The reception processing unit 213 can receive an operation instruction for controlling the operation of the work vehicle 10, in addition to a start instruction and a stop instruction for automatic traveling. For example, the reception processing unit 213 receives, from the observer, a setting operation and a changing operation for a vehicle speed, an engine speed, and the like of the work vehicle 10, an ascending and descending operation for the work machine 14, and an operation of approaching a ridge. For example, the display processing unit 212 causes the operation screen P2 (see Fig. 7A) to display an operation unit that receives the setting operation and the changing operation for the vehicle speed and the engine speed of the work vehicle 10, the ascending and descending operation for the work machine 14, and the operation of approaching a ridge. The observer can give an operation instruction to control the operation of the work vehicle 10 in a state where the observer can check a camera image. The operation control unit 21 outputs the operation instruction received by the reception processing unit 213 to the work vehicle 10.

Note that the setting processing in the setting processing unit 211 described above may be executed by the management server 40, an operation terminal (not shown) on board on the work vehicle 10, or the like. Note that the operation terminal 20 may be able to access a website (agricultural support site) of an agricultural support service provided by a server (for example, the management server 40) via the communication network N1. In this case, the operation terminal 20 can function as an operation terminal of the server, by the operation control unit 21 executing a browser program. Then, the server includes the above-described individual processing units and executes the individual processes.

Further, the operation terminal 20 sets an operation content for which the operation of the work vehicle 10 can be controlled, in accordance with whether the set mode is the short-distance mode or the long-distance mode. Further, the operation control unit 21 may cause the map screen P1 and the operation screen P2 to display information showing whether the current mode is the short-distance mode or the long-distance mode. For example, on the map screen P1, the operation control unit 21 may display, in different colors, the icon image of the work vehicle 10 set in the short-distance mode and the icon image of the work vehicle 10 set in the long-distance mode.

Further, a plurality of operation terminals 20 may be disposed for one work vehicle 10. For example, one work vehicle 10 may communicate with the operation terminal 20 for long-distance monitoring and the operation terminal 20 for short-distance monitoring, one work vehicle 10 may communicate with a plurality of operation terminals 20 for long-distance monitoring, or one work vehicle 10 may communicate with a plurality of operation terminals 20 for short-distance monitoring.

Here, in a case where the operation terminal 20 and the work vehicle 10 wirelessly communicate with each other via the management server 40, if the number of the work vehicles 10 connected to the management server 40 is large, there arises a problem that a communication amount increases and a communication load increases. In addition, when the communication amount is restricted in order to lower the communication load, there also arises a problem that communication quality becomes deteriorated and workability of a user who uses the operation terminal 20 becomes deteriorated. For example, if a communication amount of data (image data of the camera) transmitted from the work vehicle 10 is restricted, it becomes difficult for the operator (observer) to confirm safety around the work vehicle 10 in the operation terminal 20 for long-distance monitoring, and there arises a problem that workability becomes deteriorated, for example, automatic traveling is not able to be started.

In view of the problems above, the automatic traveling system 1 according to the present embodiment has a configuration capable of reducing a communication load on the management server 40 capable of wireless communication with the work vehicle 10, and inhibiting deterioration in workability of the user (operator). Specifically, the automatic traveling system 1 has a configuration in which a communication amount of a case where data is transmitted from the work vehicle 10 to the management server 40 is set on the basis of a state of the work vehicle 10 or an operation of an operator, and the data is transmitted from the work vehicle 10 to the management server 40 on the basis of the set communication amount.

### [Management server 40]

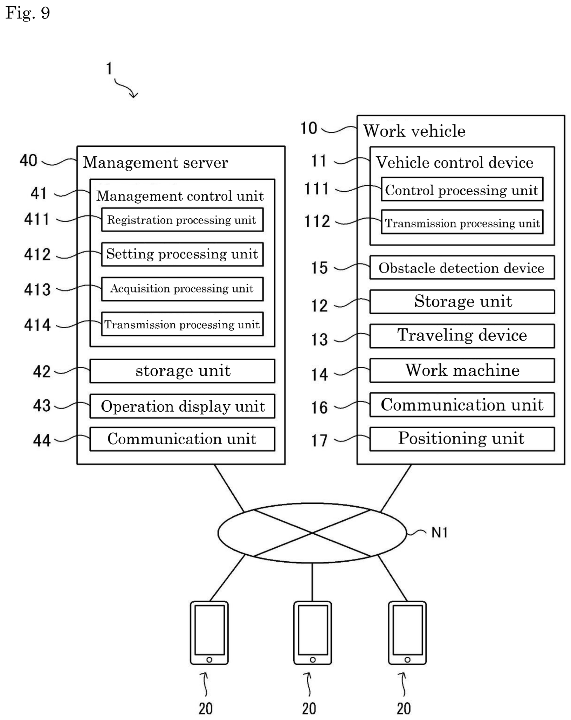

As shown in Fig. 9, the management server 40 is an information processing apparatus (server device) including a management control unit 41, a storage unit 42, an operation display unit 43, a communication unit 44, and the like. For example, the management server 40 includes a personal computer or the like. Note that the management server 40 may be configured by a cloud server. The management server 40 is an example of a communication device of the present invention.

The communication unit 44 is a communication interface for connecting the management server 40 to the communication network N1 in a wired or wireless manner, and executing data communication according to a predetermined communication protocol, with external devices such as one or a plurality of operation terminals 20 and one or a plurality of work vehicles 10 via the communication network N1.

The operation display unit 43 is a user interface including a display unit such as a liquid crystal display or an organic EL display that displays various types of information, and an operation unit such as a touch panel, a mouse, or a keyboard that receives an operation.

The storage unit 42 is a non-volatile storage unit such as an HDD, an SSD, or a flash memory that stores various types of information. The storage unit 42 stores a control program such as an automatic traveling program for causing the management control unit 41 to execute the automatic traveling processing (see Fig. 15) to be described later. For example, the automatic traveling program is non-temporarily recorded in a computer-readable recording medium such as a CD or a DVD, and is read by a predetermined reading device (not shown) and stored in the storage unit 42. Note that the automatic traveling program may be downloaded from a server (not shown) to the management server 40 via the communication network N1 and stored in the storage unit 42.

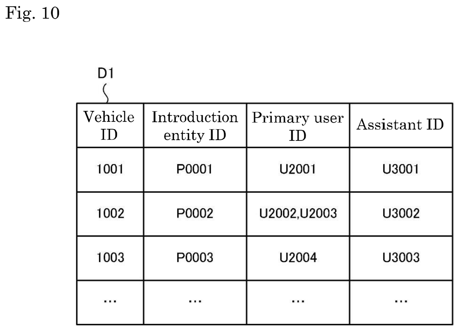

In addition, the storage unit 42 stores data such as vehicle registration information D1 (see Fig. 10) related to the work vehicle 10. As shown in Fig. 10, in the vehicle registration information D1, identification information (vehicle ID) of the work vehicle 10, identification information (introduction entity ID) of an introduction entity (an agricultural corporation, management corporation, or the like) that introduces the work vehicle 10, identification information (primary user ID) of a primary user of the work vehicle 10, and identification information (assistant ID) of an assistant are registered in association with each other for each work vehicle 10. Note that the "primary user" is a user having an operation authority for all of the work vehicle 10, and can give, for example, a start instruction for automatic traveling, a stop instruction for automatic traveling, a change instruction for a vehicle speed and an engine speed, an ascending and descending instruction for the work machine 14, an instruction to approach a ridge, a set instruction for work, and the like. In this regard, the "assistant" is a user exclusively having some operation authorities of the work vehicle 10, and can exclusively give, for example, the stop instruction for automatic traveling and the instruction to approach a ridge.

As another embodiment, a part or all of information such as the vehicle registration information D1 may be stored in the operation terminal 20.

The management control unit 41 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work region) for various types of processing executed by the CPU. Then, the management control unit 41 controls the management server 40 by executing various control programs stored in advance in the ROM or the storage unit 42 with the CPU.

As shown in Fig. 9, the management control unit 41 includes various processing units such as a registration processing unit 411, a setting processing unit 412, an acquisition processing unit 413, and a transmission processing unit 414. Note that, the management control unit 41 functions as the various processing units by executing various types of processing according to the automatic traveling program with the CPU. In addition, some or all of the processing units may include an electronic circuit. Note that, the automatic traveling program may be a program for causing a plurality of processors to function as the processing unit.

The registration processing unit 411 registers the vehicle registration information D1 (see Fig. 10). For example, when the introduction entity newly purchases the work vehicle 10 and makes an application for starting use of the management service, the registration processing unit 411 issues an ID to the introduction entity and registers the vehicle registration information D1 in which the vehicle ID of the work vehicle 10 and the introduction entity ID are associated with each other. For example, when the introduction entity additionally purchases the work vehicle 10 and makes an application for starting use of the management service, the registration processing unit 411 registers the vehicle registration information D1 in which the vehicle ID of the work vehicle 10 and the introduction entity ID are associated with each other. The registration processing unit 411 manages the vehicle ID and the introduction entity ID in association with each other for each work vehicle 10.

In addition, for example, when the introduction entity logs in a management page (not shown) and performs an operation of registering the primary user and the assistant, the registration processing unit 411 issues the primary user ID and the assistant ID, and registers the primary user ID, the assistant ID, and the vehicle ID in the vehicle registration information D1 (see Fig. 10) in association with each other. As shown in Fig. 10, the registration processing unit 411 manages the primary user ID and the assistant ID in association with each other for each work vehicle 10.

In addition, the registration processing unit 411 may register the operation terminal 20 for each work vehicle 10. For example, in a case where the work vehicle 10 as a monitoring target (management target) is registered in the operation terminal 20, the registration processing unit 411 registers the vehicle ID and identification information (terminal ID) of the operation terminal 20 in association with each other.

The setting processing unit 412 sets a communication amount of data transmitted by the work vehicle 10. Specifically, the setting processing unit 412 sets a communication amount of the work vehicle 10 on the basis of a state of the work vehicle 10 or operation information of the operator.

The setting processing unit 412 notifies the work vehicle 10 of information on the set communication amount. Specifically, the setting processing unit 412 requests the work vehicle 10 to transmit data with the set communication amount. A specific example of a method of setting the communication amount will be described later. The setting processing unit 412 is an example of a setting processing unit of the present invention.

The acquisition processing unit 413 acquires data transmitted from the work vehicle 10 on the basis of the communication amount set by the setting processing unit 412. For example, when the work vehicle 10 transmits data with the set communication amount according to the notification, the acquisition processing unit 413 acquires the data. The acquisition processing unit 413 stores the acquired data in the storage unit 42.

The transmission processing unit 414 transmits the data to the operation terminal 20 of the operator. As a result, for example, the operation terminal 20 that performs remote monitoring can display a captured image of the camera 53 on the operation screen P2 shown in Fig. 7A and the like. In addition, the operation terminal 20 can display a vehicle speed, an engine load, an engine speed, a travel history, a work history, and the like of the work vehicle 10 on the basis of the data transmitted from the management server 40.

Hereinafter, a specific example (first to seventh examples) of a method of setting a communication amount of data transmitted from the work vehicle 10 will be described.

### [First example]

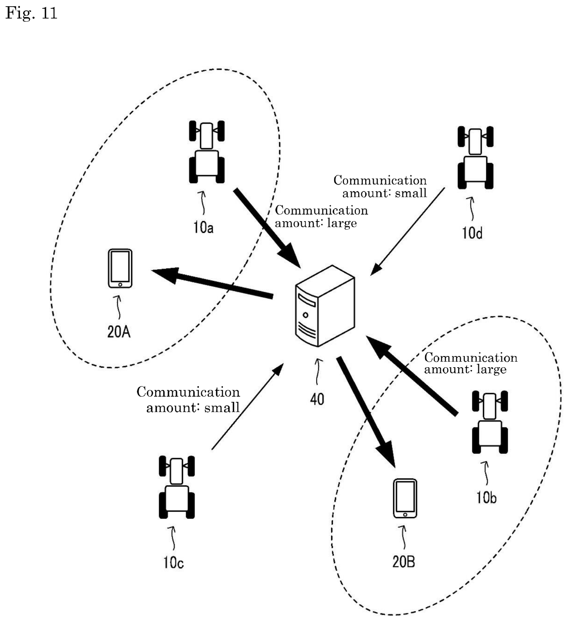

In the automatic traveling system 1 according to a first example, the setting processing unit 412 sets a communication amount of data transmitted from the work vehicle 10, according to whether the work vehicle 10 is set to the long-distance mode or the short-distance mode (an example of a state of the work vehicle 10 of the present invention). Fig. 11 is a diagram schematically showing a communication amount corresponding to the first example. Work vehicles 10a and 10b are set to the long-distance mode, and work vehicles 10c and 10d are set to the short-distance mode. An operation terminal 20A remotely monitors the work vehicle 10a, and an operation terminal 20B remotely monitors the work vehicle 10b.

Specifically, in a case where the work vehicle 10 is set to the long-distance mode, the setting processing unit 412 sets the communication amount to be larger than a communication amount set in a case where the work vehicle 10 is not set to the long-distance mode. For example, in the case of the long-distance mode, the setting processing unit 412 sets a communication amount to be larger than a communication amount in the case of the short-distance mode or a communication amount of a case where the mode is not set. In the example shown in Fig. 11, the setting processing unit 412 sets a communication amount of the work vehicles 10a and 10b to a communication amount larger than a communication amount of the work vehicles 10c and 10d.

In this case, the setting processing unit 412 notifies the work vehicles 10a and 10b set in the long-distance mode of information on a first communication amount (request for transmitting data with the first communication amount), and notifies the work vehicles 10c and 10d set in the short-distance mode of information on a second communication amount smaller than the first communication amount (request for transmitting data with the second communication amount).

As a result, the work vehicles 10a and 10b set in the long-distance mode transmit image data captured by the camera 53 to the management server 40 at a high frame rate and high resolution, for example. When the acquisition processing unit 413 acquires the data transmitted from the work vehicles 10a and 10b, the acquisition processing unit 413 stores the data in the storage unit 42. In addition, the transmission processing unit 414 transmits the data acquired from the work vehicle 10a to the operation terminal 20A, and transmits the data acquired from the work vehicle 10b to the operation terminal 20B.

When the operation terminal 20A acquires image data of the camera 53 of the work vehicle 10a set in the long-distance mode from the management server 40, for example, the operation terminal 20A displays a captured image of the camera 53 on the operation screen P2 shown in Fig. 7A and the like. As a result, upon receiving a start operation for automatic traveling from the operator, for example, the operation terminal 20A outputs a travel start instruction to the work vehicle 10a. In this manner, the operator can reliably check safety of surroundings of the work vehicle 10 set in the long-distance mode by using a high-quality camera image, and give the start instruction for automatic traveling.

Further, the operator can access data stored in the storage unit 42, to check information on the work vehicle 10 set in the long-distance mode.

In addition, since the operator does not need to check a camera image with the operation terminal 20 in the short-distance mode, the work vehicles 10c and 10d set in the short-distance mode do not transmit image data of the camera 53 to the management server 40, or transmit image data to the management server 40 at a low frame rate and a low resolution. As a result, a communication load on the management server 40 can be reduced.

### [Second example]

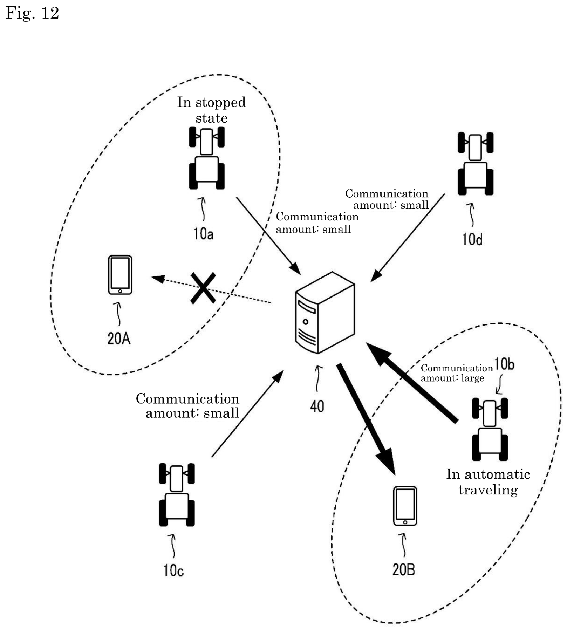

In the automatic traveling system 1 according to a second example, the setting processing unit 412 sets a communication amount of data transmitted from the work vehicle 10, according to whether or not the work vehicle 10 is automatically traveling in the long-distance mode (an example of a state of the work vehicle 10 of the present invention). Fig. 12 is a diagram schematically showing a communication amount corresponding to the second example. The work vehicles 10a and 10b are set in the long-distance mode, the work vehicle 10a is in a stopped state, and the work vehicle 10b is automatically traveling. An operation terminal 20A remotely monitors the work vehicle 10a, and an operation terminal 20B remotely monitors the work vehicle 10b.

Specifically, in a case where the work vehicle 10 is in automatic traveling in the long-distance mode, the setting processing unit 412 sets a communication amount to be larger than a communication amount set in a case where the work vehicle 10 is stopped in the long-distance mode. For example, in the long-distance mode, the setting processing unit 412 sets a communication amount during automatic traveling to a communication amount larger than a communication amount in a stopped state. In the example shown in Fig. 12, the setting processing unit 412 sets a communication amount of the work vehicle 10b to a communication amount larger than a communication amount of the work vehicle 10a.

In this case, the setting processing unit 412 notifies the work vehicle 10b in the automatic traveling of information on a first communication amount (request for transmitting data with the first communication amount), and notifies the work vehicle 10a in a stopped state of information on a second communication amount smaller than the first communication amount (request for transmitting data with the second communication amount).

As a result, the work vehicle 10b in automatic traveling in the long-distance mode transmits, for example, image data captured by the camera 53 to the management server 40 at a high frame rate and high resolution. When the acquisition processing unit 413 acquires the data transmitted from the work vehicle 10b, the acquisition processing unit 413 stores the data in the storage unit 42. In addition, the transmission processing unit 414 transmits the data acquired from the work vehicle 10b to the operation terminal 20B.

In addition, the work vehicle 10a in a stopped state in the long-distance mode transmits, for example, image data captured by the camera 53 to the management server 40 at a low frame rate, a low resolution, and a high compression rate. When the acquisition processing unit 413 acquires the data transmitted from the work vehicle 10a, the acquisition processing unit 413 stores the data in the storage unit 42. Note that the acquisition processing unit 413 may not store the data of low quality in the storage unit 42. Further, as shown in Fig. 12, the transmission processing unit 414 may be configured not to transmit the data of low quality acquired from the work vehicle 10a to the operation terminal 20A.

As another embodiment of the second example, the setting processing unit 412 may set a communication amount of data transmitted from the work vehicle 10, according to whether or not the work vehicle 10 is being remotely operated in the long-distance mode. Specifically, in a case where the work vehicle 10 is being remotely operated in the long-distance mode, the setting processing unit 412 sets a communication amount to be larger than a communication amount set in a case where the work vehicle 10 is not being remotely operated in the long-distance mode (a case of being in a stop state). For example, in the long-distance mode, the setting processing unit 412 sets a communication amount during remote operation to a communication amount larger than a communication amount in a stopped state.

Note that, in the second example, "a case where the work vehicle 10 is in automatic traveling" includes a temporary stop and a stop in the automatic traveling state, such as a case where the work vehicle 10 is temporarily stopped during automatic traveling and a case where the work vehicle 10 is stopped before a start of automatic traveling (a case where the work vehicle 10 stands by at an automatic traveling start position). That is, when the work vehicle 10 temporarily stops during automatic traveling or when the work vehicle 10 is stopped before a start of automatic traveling (a case where the work vehicle 10 stands by at an automatic traveling start position), the setting processing unit 412 sets the communication amount to a communication amount larger than the communication amount of a case where the work vehicle 10 is temporarily stopped or stopped in a state other than the automatic traveling state (for example, a manual traveling state). Note that, the temporary stop and the stop in the automatic traveling state may not be included in "a case where the work vehicle 10 is in automatic traveling" but may be included in "a case where the work vehicle 10 is stopped".

As another embodiment, during automatic traveling in which the work vehicle 10 is not temporarily stopped or stopped, the setting processing unit 412 may set the communication amount to a communication amount larger than the communication amount of a case where the work vehicle 10 is temporarily stopped or stopped.

### [Third example]

In the automatic traveling system 1 according to a third example, the setting processing unit 412 sets a communication amount of data transmitted from the work vehicle 10, according to whether or not the work vehicle 10 has detected an obstacle (an example of a state of the work vehicle 10 of the present invention).

Specifically, in a case where the work vehicle 10 has detected an obstacle in the long-distance mode, the setting processing unit 412 sets a communication amount to be larger than a communication amount set in a case where the work vehicle 10 has detected no obstacle in the long-distance mode. For example, in the case of the long-distance mode, the setting processing unit 412 sets the communication amount of a case where an obstacle has been detected to a communication amount larger than a communication amount when no obstacle is detected.

In this case, the setting processing unit 412 notifies the work vehicle 10 that has detected an obstacle of information on a first communication amount (request for transmitting data with the first communication amount), and notifies the work vehicle 10 that has detected no obstacle of information on a second communication amount smaller than the first communication amount (request for transmitting data with the second communication amount).

As a result, the work vehicle 10 that has detected an obstacle in the long-distance mode transmits, for example, image data captured by the camera 53 to the management server 40 at a high frame rate and high resolution. When the acquisition processing unit 413 acquires the data transmitted from the work vehicle 10, the acquisition processing unit 413 stores the data in the storage unit 42. In addition, the transmission processing unit 414 transmits the data acquired from the work vehicle 10 to the operation terminal 20. Note that, in a case where the work vehicle 10 has detected an obstacle, even when the work vehicle 10 is in a stopped state, the setting processing unit 412 may increase the communication amount, the acquisition processing unit 413 may store the data in the storage unit 42, and the transmission processing unit 414 may transmit the data to the operation terminal 20.

In addition, the work vehicle 10 that has detected no obstacle in the long-distance mode transmits, for example, image data captured by the camera 53 to the management server 40 at a low frame rate, a low resolution, and a high compression rate. When the acquisition processing unit 413 acquires the data transmitted from the work vehicle 10, the acquisition processing unit 413 stores the data in the storage unit 42. Note that the acquisition processing unit 413 may not store the data of low quality in the storage unit 42. Further, the transmission processing unit 414 may be configured not to transmit the data of low quality acquired from the work vehicle 10 to the operation terminal 20.

Note that, in a case of a configuration in which, when the work vehicle 10 detects an obstacle, the operation terminal 20 requests the work vehicle 10 to transmit high-quality (high resolution) data at a timing when the operation terminal 20 is communicatively connected to the work vehicle 10, there is a possibility that display of a camera image on the operation terminal 20 is delayed. Therefore, it is desirable that the setting processing unit 412 be configured to request high quality (high resolution) data from the work vehicle 10 at a timing when the work vehicle 10 detects an obstacle. As a result, when an obstacle is detected, the operator can immediately check a high-quality camera image on the operation terminal.

### [Fourth example]

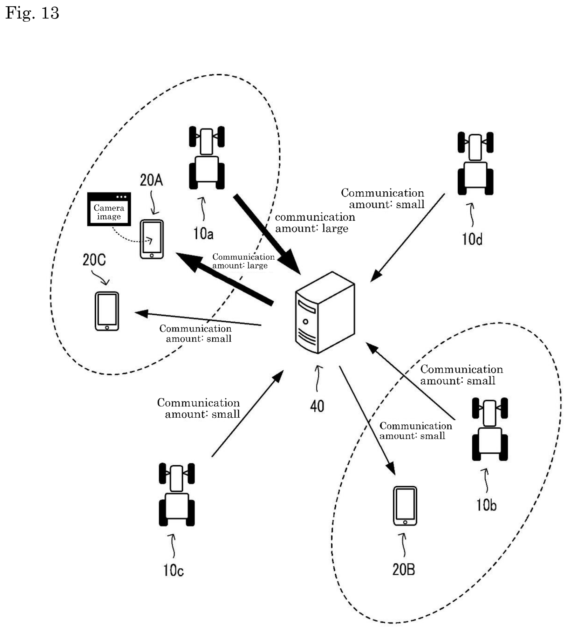

In the automatic traveling system 1 according to a fourth example, the setting processing unit 412 sets a communication amount of data transmitted from the work vehicle 10, according to whether or not a surrounding video image of the work vehicle 10 is displayed on the operation terminal 20 (an example of a state of the work vehicle 10 of the present invention). Fig. 13 is a diagram schematically showing a communication amount corresponding to the fourth example. The work vehicles 10a and 10b are set to the long-distance mode. The operation terminal 20A remotely monitors the work vehicle 10a, and displays a surrounding video image (camera image) of the work vehicle 10a. An operation terminal 20C remotely monitors the work vehicle 10a, and does not display a surrounding video image (camera image) of the work vehicle 10a. In addition, the operation terminal 20B remotely monitors the work vehicle 10b, and does not display a surrounding video image (camera image) of the work vehicle 10b.

Specifically, in a case where a surrounding video image of the work vehicle 10 in the long-distance mode is displayed on the operation terminal 20, the setting processing unit 412 sets the communication amount of the work vehicle 10 to be larger than a communication amount set in a case where the surrounding video image of the work vehicle 10 in the long-distance mode is not displayed on the operation terminal 20. In the example shown in Fig. 13, the setting processing unit 412 sets a communication amount of the work vehicle 10a to a communication amount larger than a communication amount of the work vehicle 10b.

In this case, the setting processing unit 412 notifies the work vehicle 10a of information on a first communication amount (request for transmitting data with the first communication amount), and notifies the work vehicle 10b of information on a second communication amount smaller than the first communication amount (request for transmitting data with the second communication amount).

As a result, the work vehicle 10a in the long-distance mode transmits, for example, image data captured by the camera 53 to the management server 40 at a high frame rate and high resolution. When the acquisition processing unit 413 acquires the data transmitted from the work vehicle 10a, the acquisition processing unit 413 stores the data in the storage unit 42. In addition, the transmission processing unit 414 transmits the data acquired from the work vehicle 10a to the operation terminal 20A.

In addition, since the operation terminal 20C remotely monitors the work vehicle 10a but does not display the surrounding video image, the transmission processing unit 414 transmits the data acquired from the work vehicle 10a to the operation terminal 20C with low quality or does not transmit the data to the operation terminal 20C. As described above, when the management server 40 acquires high-quality data from the work vehicle 10a, the management server 40 transmits the high-quality data to the operation terminal 20A that displays the surrounding video image of the work vehicle 10a, and transmits low-quality data (or transmits no data) to the operation terminal 20C that does not display the surrounding video image of the work vehicle 10a.

Similarly, since the operation terminal 20B remotely monitors the work vehicle 10b but does not display the surrounding video image, the transmission processing unit 414 transmits the data acquired from the work vehicle 10b to the operation terminal 20B with low quality or does not transmit the data to the operation terminal 20B.

### [Fifth example]

In the automatic traveling system 1 according to a fifth example, the setting processing unit 412 sets a communication amount of data transmitted from the work vehicle 10, according to whether or not the work vehicle 10 is in automatic traveling (an example of a state of the work vehicle 10 of the present invention).

Specifically, the setting processing unit 412 sets a communication amount of a case where the work vehicle 10 is in automatic traveling to be larger than a communication amount set when the work vehicle 10 is not in automatic traveling (the work vehicle 10 is stopped).

In this case, the setting processing unit 412 notifies the work vehicle 10 in the automatic traveling of information on a first communication amount (request for transmitting data with the first communication amount), and notifies the work vehicle 10 in a stopped state of information on a second communication amount smaller than the first communication amount (request for transmitting data with the second communication amount).

As a result, the work vehicle 10 in automatic traveling transmits, for example, image data captured by the camera 53 to the management server 40 at a high frame rate and high resolution. When the acquisition processing unit 413 acquires the data transmitted from the work vehicle 10, the acquisition processing unit 413 stores the data in the storage unit 42. In addition, the transmission processing unit 414 transmits the data acquired from the work vehicle 10 to the operation terminal 20. Note that, in a case where the work vehicle 10 is in automatic traveling, regardless of the long-distance mode or the short-distance mode, the setting processing unit 412 may increase the communication amount, the acquisition processing unit 413 may store the data in the storage unit 42, and the transmission processing unit 414 may transmit the data to the operation terminal 20.

In addition, the work vehicle 10 in a stopped state transmits, for example, image data captured by the camera 53 to the management server 40 at a low frame rate, a low resolution, and a high compression rate. When the acquisition processing unit 413 acquires the data transmitted from the work vehicle 10, the acquisition processing unit 413 stores the data in the storage unit 42. Note that the acquisition processing unit 413 may not store the data of low quality in the storage unit 42. Further, the transmission processing unit 414 may be configured not to transmit the data of low quality acquired from the work vehicle 10 to the operation terminal 20.

As another embodiment of the fifth example, in a case where the work vehicle 10 is in the automatic traveling mode, the setting processing unit 412 may set a communication amount to a communication amount larger than a communication amount of a case where the work vehicle 10 is in the manual traveling mode. That is, the setting processing unit 412 may set a communication amount of data transmitted from the work vehicle 10, according to a travel mode (the automatic traveling mode or the manual traveling mode) of the work vehicle 10.

Note that, in the fifth example, "a case where the work vehicle 10 is in automatic traveling" includes a temporary stop and a stop in the automatic traveling state, such as a case where the work vehicle 10 temporarily stops during automatic traveling and a case where the work vehicle 10 is stopped before a start of automatic traveling (a case where the work vehicle 10 stands by at an automatic traveling start position). That is, when the work vehicle 10 is temporarily stopped during automatic traveling or when the work vehicle 10 is stopped before a start of automatic traveling (a case where the work vehicle 10 stands by at an automatic traveling start position), the setting processing unit 412 sets the communication amount to a communication amount larger than the communication amount of a case where the work vehicle is temporarily stopped or stopped in a state other than the automatic traveling state (for example, a manual traveling state). Note that, the temporary stop and the stop in the automatic traveling state may not be included in "a case where the work vehicle 10 is in automatic traveling" but may be included in "a case where the work vehicle 10 is stopped".

As another embodiment, during automatic traveling in which the work vehicle 10 is not temporarily stopped or stopped, the setting processing unit 412 may set the communication amount to a communication amount larger than the communication amount of a case where the work vehicle 10 is temporarily stopped or stopped.

### [Sixth example]

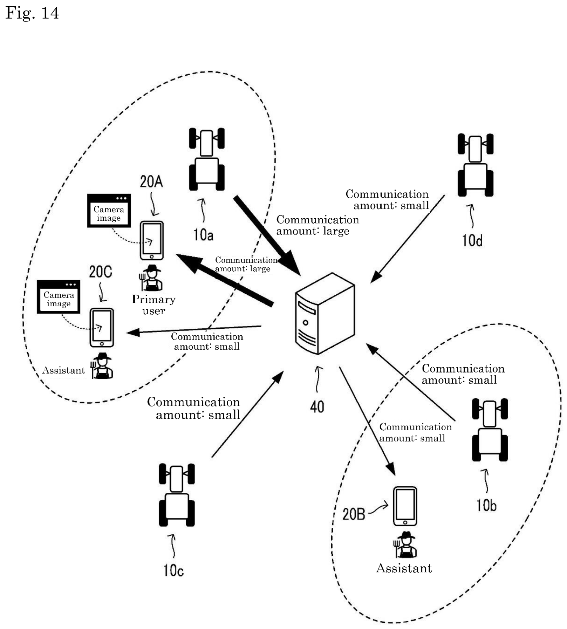

In the automatic traveling system 1 according to a sixth example, the setting processing unit 412 sets a communication amount of data transmitted from the work vehicle 10, according to an operation authority of an operator (an example of operation information of the present invention). Fig. 14 is a diagram schematically showing a communication amount corresponding to the sixth example. The work vehicles 10a and 10b are set to the long-distance mode. The operation terminal 20A is an operation terminal operated by a primary user, remotely monitors the work vehicle 10a, and displays a surrounding video image (camera image) of the work vehicle 10a. The operation terminal 20C is an operation terminal operated by an assistant, remotely monitors the work vehicle 10a, and displays a surrounding video image (camera image) of the work vehicle 10a. Further, the operation terminal 20B is an operation terminal operated by an assistant, remotely monitors the work vehicle 10b, and does not display a surrounding video image (camera image) of the work vehicle 10b.

The operation authority includes: an authority (primary user authority) capable of giving all operation instructions to the work vehicle 10, such as a start instruction for automatic traveling, a stop instruction for automatic traveling, a change instruction for a vehicle speed and an engine speed, an ascending and descending instruction for the work machine 14, an instruction to approach a ridge, a set instruction for work, and the like; and an authority (assistant authority) capable of exclusively giving some operation instructions to the work vehicle 10, such as the stop instruction for automatic traveling and the instruction to approach a ridge.

Specifically, the setting processing unit 412 sets a communication amount of the work vehicle 10 of a case where the primary user uses the operation terminal 20 to be larger than a communication amount set in a case where the assistant uses the operation terminal 20. In the example shown in Fig. 14, the setting processing unit 412 sets a communication amount of the work vehicle 10a to a communication amount larger than a communication amount of the work vehicle 10b.

In this case, the setting processing unit 412 notifies the work vehicle 10a of information on a first communication amount (request for transmitting data with the first communication amount), and notifies the work vehicle 10b of information on a second communication amount smaller than the first communication amount (request for transmitting data with the second communication amount).

As a result, the work vehicle 10a transmits, for example, image data captured by the camera 53 to the management server 40 at a high frame rate and high resolution. When the acquisition processing unit 413 acquires the data transmitted from the work vehicle 10a, the acquisition processing unit 413 stores the data in the storage unit 42. In addition, the transmission processing unit 414 transmits the data acquired from the work vehicle 10a to the operation terminal 20A.

Further, since the operation terminal 20C is used by the assistant, the transmission processing unit 414 transmits the data acquired from the work vehicle 10a to the operation terminal 20C with low quality, or does not transmit the data to the operation terminal 20C. As described above, when the management server 40 acquires high-quality data from the work vehicle 10a, the management server 40 transmits the high-quality data to the operation terminal 20A used by the primary user (logged in by the primary user), and transmits low-quality data (or transmits no data) to the operation terminal 20C used by the assistant (logged in by the assistant).

For example, the transmission processing unit 414 transmits image data of the camera transmitted from the work vehicle 10a to the operation terminal 20A of the primary user (first operator) having a start authority for automatic traveling with a high resolution of the first communication amount, and transmits image data to the operation terminal 20B of the assistant (second operator) not having the start authority with a low resolution smaller than the first communication amount. In this manner, the management server 40 (for example, a cloud server) executes resolution conversion processing and image data transmission processing. As a result, the primary user can check a camera image on the operation terminal 20A and perform a start operation for automatic traveling.

Similarly, since the operation terminal 20B is used by the assistant, the transmission processing unit 414 transmits the data acquired from the work vehicle 10b to the operation terminal 20B with low quality, or does not transmit the data to the operation terminal 20B.

Note that the setting processing unit 412 can determine whether the user (operator) of the operation terminal 20 is the primary user or the assistant on the basis of the vehicle registration information D1 (see Fig. 10).

As another embodiment of the sixth example, even when the primary user uses the operation terminal 20A, the setting processing unit 412 may set a communication amount of the work vehicle 10a to be small when a surrounding video image (camera image) of the work vehicle 10a is not displayed on the operation terminal 20A. That is, when the primary user uses the operation terminal 20, the setting processing unit 412 sets the communication amount of the work vehicle 10, according to whether or not a camera image is displayed on the operation terminal 20. In contrast, when the assistant uses the operation terminal 20, the setting processing unit 412 sets the communication amount of the work vehicle 10 to be small regardless of whether or not a camera image is displayed on the operation terminal 20.

As another embodiment of the sixth example, the setting processing unit 412 may set a communication amount of data transmitted from the work vehicle 10, according to an operation authority set in the operation terminal 20. For example, when the operation terminal 20 is set as a main operation terminal that permits reception of all operation instructions, the setting processing unit 412 sets the communication amount of the work vehicle 10 to be large. In contrast, when the operation terminal 20 is set as a sub operation terminal that exclusively permits reception of some operation instructions, the setting processing unit 412 sets the communication amount of the work vehicle 10 to be small. Note that, the main operation terminal and the sub operation terminal may be set at a time of introduction of the work vehicle 10, registration of a primary user and an assistant, or the like.

### [Seventh example]

In the automatic traveling system 1 according to a seventh example, the setting processing unit 412 sets a communication amount of data transmitted from the work vehicle 10, according to the number of the work vehicles 10 capable of wireless communication with the management server 40 (an example of a state of the work vehicle 10 of the present invention).

Specifically, in a case where there are a predetermined number or more of the work vehicles 10 capable of wireless communication with the management server 40, the setting processing unit 412 sets a communication amount between the work vehicle 10 in a predetermined state and the management server 40 to be smaller than a predetermined communication amount. The predetermined state includes the states of the first to sixth examples described above. For example, in a case where there are a predetermined number or more of the work vehicles 10 capable of wireless communication with the management server 40, the setting processing unit 412 sets a communication amount of the work vehicle 10 set in the long-distance mode to be larger than a communication amount of the work vehicle 10 set in the short-distance mode and smaller than the predetermined communication amount (corresponding to the first example).

In addition, for example, in a case where there are a predetermined number or more of the work vehicles 10 capable of wireless communication with the management server 40, the setting processing unit 412 sets a communication amount of the work vehicle 10 in automatic traveling in the long-distance mode to be larger than a communication amount of the work vehicle 10 in a stopped state in the long-distance mode and smaller than the predetermined communication amount (corresponding to the second example).

In addition, for example, in a case where there are a predetermined number or more of the work vehicles 10 capable of wireless communication with the management server 40, the setting processing unit 412 sets a communication amount of the work vehicle 10 that has detected an obstacle to be larger than a communication amount of the work vehicle 10 that has detected no obstacle and smaller than the predetermined communication amount (corresponding to the third example).

In addition, for example, in a case where there are a predetermined number or more of the work vehicles 10 capable of wireless communication with the management server 40, when a surrounding video image of the work vehicle 10 in the long-distance mode is displayed on the operation terminal 20, the setting processing unit 412 sets a communication amount of the work vehicle 10 to be larger than a communication amount of the work vehicle 10 of a case where the surrounding video image of the work vehicle 10 in the long-distance mode is not displayed on the operation terminal 20, and to be smaller than the predetermined communication amount (corresponding to the fourth example).

In addition, for example, in a case where there are a predetermined number or more of the work vehicles 10 capable of wireless communication with the management server 40, the setting processing unit 412 sets a communication amount of the work vehicle 10 in automatic traveling to be larger than a communication amount of the work vehicle 10 in a stopped state and smaller than the predetermined communication amount (corresponding to the fifth example).

Further, for example, in a case where there are a predetermined number or more of the work vehicles 10 capable of wireless communication with the management server 40, the setting processing unit 412 sets a communication amount of the work vehicle 10 of a case where the primary user uses the operation terminal 20 to be larger than a communication amount of the work vehicle 10 of a case where the assistant uses the operation terminal 20, and to be smaller than the predetermined communication amount (corresponding to the sixth example).

According to each of the above configurations, even if the number of work vehicles 10 capable of wireless communication with the management server 40 is large, it is possible to reduce a communication load on the entire system while enabling appropriate data communication for each work vehicle 10.

### [Automatic traveling processing]

Hereinafter, an example of the automatic traveling processing executed by the automatic traveling system 1 will be described with reference to Fig. 15.

Note that, the present invention can be understood as an invention of an automatic traveling method (an example of a communication control method of the present invention) for executing one or a plurality of steps included in the automatic traveling processing. Furthermore, one or a plurality of steps included in the automatic traveling processing described here may be appropriately omitted. Note that an execution order of each step in the automatic traveling processing may be different within a range in which similar operational effects are produced. Furthermore, here, a case where the vehicle control device 11 and the management control unit 41 execute each step in the automatic traveling processing will be described as an example, but an automatic traveling method in which one or a plurality of processors dispersedly execute each step in the automatic traveling processing is also considered as another embodiment.

Furthermore, here, the automatic traveling processing corresponding to the fourth example will be described.

### <Step S1>

In step S1, the vehicle control device 11 sets a mode for controlling the operation of the work vehicle 10. Specifically, the vehicle control device 11 sets the short-distance mode or the long-distance mode. For example, the vehicle control device 11 sets the short-distance mode or the long-distance mode according to a mode selected by an operator on an operation terminal (the present terminal) mounted on the work vehicle 10.

### <Step S2>

In step S2, the vehicle control device 11 determines whether or not an automatic traveling start instruction (travel start instruction) has been acquired. When the vehicle control device 11 acquires the travel start instruction (S2: Yes), the process proceeds to step S3. The vehicle control device 11 waits until the travel start instruction is acquired (S2: No). Specifically, when the vehicle control device 11 acquires the travel start instruction from the operation terminal 20 used by the primary user having the start authority for automatic traveling, the process proceeds to step S3. In contrast, when the vehicle control device 11 acquires the travel start instruction from the operation terminal 20 used by the assistant who does not have the start authority for automatic traveling, the vehicle control device 11 may notify the operation terminal 20 of error information.

### <Step S3>

In step S3, the vehicle control device 11 causes the work vehicle 10 to start automatic traveling. The work vehicle 10 starts automatic traveling according to a target route, and performs predetermined work in a work region.

### <Step S4>

In step S4, the management control unit 41 determines whether or not the long-distance mode is set. In a case where the work vehicle 10 is set in the long-distance mode (S4: Yes), the management control unit 41 causes the process to proceed to step S5. Whereas, in a case where the work vehicle 10 is set in the short-distance mode (S4: No), the management control unit 41 causes the process to proceed to step S41.

### <Step S5>

In step S5, the management control unit 41 determines whether or not a camera image of surroundings of the work vehicle 10 is displayed on the operation terminal 20 connected to the work vehicle 10. When the camera image is displayed on the operation terminal 20 (S5: Yes), the management control unit 41 causes the process to proceed to step S6. Whereas, if the camera image is not displayed on the operation terminal 20 (S5: No), the management control unit 41 causes the process to proceed to step S41.

### <Step S6>

In step S6, the management control unit 41 sets a data communication amount of the work vehicle 10 to "large". For example, the management control unit 41 increases a communication amount of data such as an image captured by the camera 53, and a vehicle speed, an engine load, an engine speed, a travel history, and a work history of the work vehicle 10. After step S6, the process proceeds to step S7.

### <Step S41>

In contrast, in step S41, the management control unit 41 sets the data communication amount of the work vehicle 10 to "small". That is, the management control unit 41 sets a communication amount of the work vehicle 10 in the short-distance mode to be smaller than a communication amount in the long-distance mode. In addition, the management control unit 41 sets a communication amount of the work vehicle 10 of a case where the camera image is not displayed in the long-distance mode to be smaller than a communication amount of the work vehicle 10 of a case where the camera image is displayed in the long-distance mode. After step S41, the process proceeds to step S7.

### <Step S7>

In step S7, the vehicle control device 11 determines whether or not the work vehicle 10 has reached a travel end position. When the work vehicle 10 reaches the travel end position (S7: Yes), the vehicle control device 11 ends the vehicle control processing. If the work vehicle 10 has not reached the travel end position (S7: No), the vehicle control device 11 causes the process to proceed to step S4 and continues automatic traveling.

The automatic traveling system 1 executes the automatic traveling processing as described above. Further, the automatic traveling system 1 executes the automatic traveling processing in parallel for each work vehicle 10.

As described above, the automatic traveling system 1 according to the present embodiment sets a communication amount of a case where data is transmitted from the work vehicle 10 that performs predetermined work in a field to the management server 40 capable of wireless communication with the work vehicle 10, on the basis of a state of the work vehicle 10 or operation information of the operator, and the automatic traveling system 1 causes the work vehicle 10 to transmit the data to the management server 40 on the basis of the set communication amount. Specifically, the automatic traveling system 1 sets (changes) the communication amount of the data of the work vehicle 10, on the basis of a state of the work vehicle 10 such as a mode (the long-distance mode or the short-distance mode) set in the work vehicle 10, a traveling state (in automatic traveling or in a stopped state) of the work vehicle 10, a detection state of an obstacle (an obstacle has been detected or has not been detected), a display state of a camera image of the work vehicle 10 (a camera image is being displayed or not displayed), and the number of work vehicles 10 being communicatively connected. In addition, the automatic traveling system 1 sets (changes) the communication amount of the data of the work vehicle 10 on the basis of operation information of an operator such as an operation authority (the primary user authority or the assistant authority) of the operator of the operation terminal 20 and a communication amount setting operation performed by the operator.

According to the configuration described above, for example, the camera image can be displayed with high resolution on the operation terminal 20 that is being remotely monitored, and the camera image can be made not to be displayed or can be displayed with a low resolution on the operation terminal 20 that is not being remotely monitored. Therefore, it is possible to reduce the communication load and inhibit deterioration of the workability of the operator.

Note that, the automatic traveling system 1 may cause communication between the work vehicle 10 and the operation terminal 20 (an example of a communication device of the present invention) capable of wireless communication with the work vehicle 10, on the basis of the set communication amount. That is, the work vehicle 10 and the operation terminal 20 may directly perform data communication. In this case, the automatic traveling system 1 sets a communication amount of data transmitted from the work vehicle 10 to the operation terminal 20 on the basis of a state of the work vehicle 10 or operation information of the operator. That is, the communication device of the present invention may be the management server 40 or may be the operation terminal 20.

In addition, for example, the management server 40 may set a communication amount at the time of transmitting data acquired from the work vehicle 10 to the operation terminal 20. In this case, the communication amount of data transmitted from the work vehicle 10 may be set constant.

### [Other embodiments]

Hereinafter, another embodiment of the automatic traveling system 1 will be described.

As another embodiment, the setting processing unit 412 may set and change a communication amount of the work vehicle 10 in accordance with a setting operation (an example of operation information of the present invention) of an operator. For example, on the operation screen (not shown) of the operation terminal 20, when the operator selects the work vehicle 10 as a setting target and selects one of "large", "medium", and "small" as the communication amount, the setting processing unit 412 sets the communication amount for the selected work vehicle 10. Note that the setting processing unit 412 may be able to change the communication amount while the work vehicle 10 is automatically traveling.

As another embodiment, the work vehicle 10 may stop automatic traveling when the communication amount is not equal to or greater than a predetermined amount. For example, automatic traveling is stopped when the set communication amount becomes smaller than the predetermined amount while the work vehicle 10 is automatically traveling. Further, when the automatic traveling is restarted after automatic traveling is stopped, the restart of automatic traveling may be permitted on condition that the communication amount is equal to or greater than the predetermined amount.

As another embodiment, the setting processing unit 412 may set a communication amount of data to be transmitted to each operation terminal 20 in accordance with the number of operation terminals 20 connected to one work vehicle 10. For example, in a case where two operation terminals 20 for remote monitoring are connected to the work vehicle 10, and a camera image is displayed on one operation terminal 20 and no camera image is displayed on another operation terminal 20, the setting processing unit 412 sets a communication amount of the one operation terminal 20 to "large" and a communication amount of another operation terminal 20 to "small" (see Fig. 13).

For example, when three operation terminals 20X, 20Y, and 20Z for remote monitoring are connected to the work vehicle 10, and a camera image is displayed on the operation terminal 20X and no camera image is displayed on the operation terminals 20Y and 20Z, the setting processing unit 412 sets a communication amount of the operation terminal 20X to "large" and sets a communication amount of the operation terminals 20Y and 20Z to "small".

For example, when three operation terminals 20X, 20Y, and 20Z for remote monitoring are connected to the work vehicle 10, camera images are displayed on the operation terminals 20X and 20Y, and no camera image is displayed on the operation terminal 20Z, the setting processing unit 412 sets a communication amount of the operation terminals 20X and 20Y to "large", and sets a communication amount of the operation terminal 20Z to "none" (no data transmission).

As described above, the setting processing unit 412 may vary the data communication amount in accordance with the number and a display state of the operation terminals 20. Further, the setting processing unit 412 may allocate a predetermined communication amount to each operation terminal 20 in accordance with the number and a display state of operation terminals 20. For example, in the predetermined communication amount, the setting processing unit 412 allocates a large communication amount to an operation terminal 20 displaying a camera image among the operation terminals 20 communicatively connected to the work vehicle 10, and allocates, to an operation terminal 20 not displaying the camera image, the remaining communication amount excluding the communication amount allocated to the operation terminal 20 displaying the camera image.

As another embodiment, the setting processing unit 412 may vary a data communication amount in accordance with an operation authority of the operator using the operation terminal 20, that is, the number of primary users and the number of assistants. For example, in a case where the user of the operation terminal 20 communicatively connected to the work vehicle 10 is an assistant alone, the setting processing unit 412 sets the communication amount to be small. In contrast, in a case where the users of the operation terminals 20 communicatively connected to the work vehicle 10 are the primary user and the assistant, in the predetermined communication amount, the setting processing unit 412 allocates a large communication amount to the operation terminal 20 of the primary user, and allocates, to the assistant, the remaining communication amount excluding the communication amount allocated to the primary user.

As described above, in the above-described embodiment, the automatic traveling system 1 corresponds to a communication control system according to the present invention, but the communication control system according to the present invention may be configured by the management server 40 alone, may be configured by the work vehicle 10 alone, or may be configured by the operation terminal 20. For example, the vehicle control device 11 of the work vehicle 10 may set a communication amount at the time of transmitting data to the work vehicle 10 and the communication device (the management server 40 or the operation terminal 20) on the basis of a state of the work vehicle 10 or an operation of an operator, and transmit the data to the communication device on the basis of the set communication amount. That is, the vehicle control device 11 may set the communication amount of the data to be transmitted.

### [Additional note of invention]

Hereinafter, an outline of the invention extracted from the embodiment will be additionally described. Note that configurations and processing functions, which are described in the following additional notes, can be selected and freely combined.

### <Additional Note 1>

A communication control method including:
setting a communication amount of a case where data is transmitted from a work vehicle that performs predetermined work in a field to a communication device capable of wireless communication with the work vehicle, based on a state of the work vehicle or operation information of an operator; and
causing the work vehicle to transmit the data to the communication device based on the set communication amount.

### <Additional Note 2>

The communication control method according to Additional Note 1, including setting, in a case where a first mode (long-distance mode) is set, the communication amount to be larger than a communication amount set in a case where the first mode is not set, the first mode being a mode in which an operation terminal of an operator communicates with the work vehicle via a server that is the communication device.

### <Additional Note 3>

The communication control method according to Additional Note 2, including setting, in a case where the first mode is set, the communication amount to be larger than a communication amount set in a case where a second mode (short-distance mode) is set, the second mode being a mode in which the operation terminal and the work vehicle communicate with each other without the server.

### <Additional Note 4>

The communication control method according to Additional Note 2 or 3, in which
the work vehicle is capable of automatic traveling, and
the communication amount of a case where the work vehicle is automatically traveling in the first mode is set to be larger than a communication amount set in a case where the work vehicle is stopped in the first mode.

### <Additional Note 5>

The communication control method according to any one of Additional Notes 1 to 4, in which
the work vehicle is capable of detecting an obstacle around the work vehicle, and
the communication amount of a case where the obstacle has been detected is set to be larger than a communication amount set in a case where the obstacle has not been detected.

### <Additional Note 6>

The communication control method according to any one of Additional Notes 1 to 5, including setting, in a case where a surrounding video image of the work vehicle is displayed on an operation terminal of an operator, the communication amount to be larger than a communication amount set in a case where a surrounding video image of the work vehicle is not displayed on the operation terminal.

### <Additional Note 7>

The communication control method according to any one of Additional Notes 1 to 6, in which
the work vehicle is capable of automatic traveling, and
the communication amount of a case where the work vehicle is automatically traveling is set to be larger than a communication amount set in a case where the work vehicle is stopped.

### <Additional Note 8>

The communication control method according to any one of Additional Notes 1 to 7, including setting the communication amount of data to be transmitted to an operation terminal based on an operation authority that is set to an operator who uses the operation terminal or an operation authority that is set to the operation terminal.

### <Additional Note 9>

The communication control method according to Additional Note 8, including setting, in a case where communication is possible with an operation terminal of an operator who has a predetermined operation authority, the communication amount to be larger than a communication amount of a case where communication is possible with an operation terminal of an operator who does not have the predetermined operation authority.

### <Additional Note 10>

The communication control method according to any one of Additional Notes 1 to 9, in which the communication device transmits data transmitted from the work vehicle to an operation terminal of an operator, based on the set communication amount.

### <Additional Note 11>

The communication control method according to Additional Note 10, in which
in a plurality of operation terminals capable of displaying a surrounding video image captured by a camera of the work vehicle,
the communication device transmits, with a high resolution of a first communication amount, image data of the camera transmitted from the work vehicle to a first operation terminal of a first operator having a start authority for automatic traveling, and transmits, with a low resolution smaller than the first communication amount, image data of the camera to a second operation terminal of a second operator who does not have the start authority for automatic traveling.

### <Additional Note 12>

The communication control method according to any one of Additional Notes 1 to 11, including setting the communication amount between the work vehicle in a predetermined state and the communication device to be smaller than a predetermined communication amount, in a case where there are a predetermined number or more of the work vehicles capable of wireless communication with the communication device.

### <Additional Note 13>

A communication control program for causing one or a plurality of processors to execute:
setting a communication amount of a case where data is transmitted from a work vehicle that performs predetermined work in a field to a communication device capable of wireless communication with the work vehicle, based on a state of the work vehicle or operation information of an operator; and
causing the work vehicle to transmit the data to the communication device based on the set communication amount.

### <Additional Note 14>

A communication control system including:
a setting processing unit that sets a communication amount of a case where data is transmitted from a work vehicle that performs predetermined work in a field to a communication device capable of wireless communication with the work vehicle, based on a state of the work vehicle or operation information of an operator; and
a transmission processing unit that causes the work vehicle to transmit the data to the communication device based on the communication amount set by the setting processing unit.

### LIST OF REFERENCE SIGNS

- 1: Automatic traveling system
- 10: Work vehicle
- 11: Vehicle control device
- 20: Operation terminal (communication device)
- 21: Operation control unit
- 40: Management server (communication device and server)
- 41: Management control unit
- 51: Detection control unit
- 53: Camera
- 111: Control processing unit
- 112: Transmission processing unit
- 211: Setting processing unit
- 212: Display processing unit
- 213: Reception processing unit
- 411: Registration processing unit
- 412: Setting processing unit
- 413: Acquisition processing unit
- 414: Transmission processing unit
- D1: Vehicle registration information

## Claims

1. A communication control method comprising:
setting a communication amount of a case where data is transmitted from a work vehicle that performs predetermined work in a field to a communication device capable of wireless communication with the work vehicle, based on a state of the work vehicle or operation information of an operator; and
causing the work vehicle to transmit the data to the communication device based on the set communication amount.

2. The communication control method according to claim 1, comprising setting, in a case where a first mode is set, the communication amount to be larger than a communication amount set in a case where the first mode is not set, the first mode being a mode in which an operation terminal of an operator communicates with the work vehicle via a server that is the communication device.

3. The communication control method according to claim 2, comprising setting, in a case where the first mode is set, the communication amount to be larger than a communication amount set in a case where a second mode is set, the second mode being a mode in which the operation terminal and the work vehicle communicate with each other without the server.

4. The communication control method according to claim 2, wherein
the work vehicle is capable of automatic traveling, and
the communication amount of a case where the work vehicle is automatically traveling in the first mode is set to be larger than a communication amount set in a case where the work vehicle is stopped in the first mode.

5. The communication control method according to claim 1, wherein
the work vehicle is capable of detecting an obstacle around the work vehicle, and
the communication amount of a case where the obstacle has been detected is set to be larger than a communication amount set in a case where the obstacle has not been detected.

6. The communication control method according to claim 1, comprising setting, in a case where a surrounding video image of the work vehicle is displayed on an operation terminal of an operator, the communication amount to be larger than a communication amount set in a case where a surrounding video image of the work vehicle is not displayed on the operation terminal.

7. The communication control method according to claim 1, wherein
the work vehicle is capable of automatic traveling, and
the communication amount of a case where the work vehicle is automatically traveling is set to be larger than a communication amount set in a case where the work vehicle is stopped.

8. The communication control method according to claim 1, comprising setting the communication amount of data to be transmitted to an operation terminal based on an operation authority that is set to an operator who uses the operation terminal or an operation authority that is set to the operation terminal.

9. The communication control method according to claim 8, comprising setting, in a case where communication is possible with an operation terminal of an operator who has a predetermined operation authority, the communication amount to be larger than a communication amount of a case where communication is possible with an operation terminal of an operator who does not have the predetermined operation authority.

10. The communication control method according to claim 1, wherein the communication device transmits data transmitted from the work vehicle to an operation terminal of an operator, based on the set communication amount.

11. The communication control method according to claim 10, wherein
in a plurality of operation terminals capable of displaying a surrounding video image captured by a camera of the work vehicle,
the communication device transmits, with a high resolution of a first communication amount, image data of the camera transmitted from the work vehicle to a first operation terminal of a first operator having a start authority for automatic traveling, and transmits, with a low resolution smaller than the first communication amount, image data of the camera to a second operation terminal of a second operator who does not have the start authority for automatic traveling.

12. The communication control method according to any one of claims 1 to 11, comprising setting the communication amount between the work vehicle in a predetermined state and the communication device to be smaller than a predetermined communication amount, in a case where there are a predetermined number or more of the work vehicles capable of wireless communication with the communication device.

13. A communication control program for causing one or a plurality of processors to execute:
setting a communication amount of a case where data is transmitted from a work vehicle that performs predetermined work in a field to a communication device capable of wireless communication with the work vehicle, based on a state of the work vehicle or operation information of an operator; and
causing the work vehicle to transmit the data to the communication device based on the set communication amount.

14. A communication control system comprising:
a setting processing unit that sets a communication amount of a case where data is transmitted from a work vehicle that performs predetermined work in a field to a communication device capable of wireless communication with the work vehicle, based on a state of the work vehicle or operation information of an operator; and
a transmission processing unit that causes the work vehicle to transmit the data to the communication device based on the communication amount set by the setting processing unit.
